# EUROPÄISCHE PATENTSCHRIFT

(11) **EP 3 841 862 B1**
(45) Veröffentlichungstag und Bekanntmachung des Hinweises auf die Patenterteilung: **24.04.2024**
(21) Anmeldenummer: 20205945.7
(22) Anmeldetag: 05.11.2020
(51) Int. Cl.: A01D 34/66, A01D 34/81, A01D 75/20

(54) **KREISEL-MÄHKOPF**
ROTARY MOWER HEAD
TÊTE FAUCHEUSE ROTATIVE

(30) Priorität: 23.12.2019 DE 102019135707; 08.07.2020 DE 102020118051
(43) Veröffentlichungstag der Anmeldung: 30.06.2021
(73) Patentinhaber: MULAG FAHRZEUGWERK Heinz Wössner GmbH & CO. KG, 77728 Oppenau (DE)
(72) Erfinder: Meißner, Uwe, 77876 Kappelrodeck (DE)
(74) Vertreter: Weickmann & Weickmann PartmbB

(56) Entgegenhaltungen:
- EP-A1- 0 110 812
- EP-A1- 0 165 624
- EP-A1- 0 763 319
- EP-A1- 1 002 458
- EP-A1- 2 656 712
- EP-A1- 2 727 457
- EP-A2- 0 267 659
- WO-A1-2016/197125
- DE-A1- 3 149 875
- DE-A1- 3 501 133
- DE-A1-102015 006 065
- GB-A- 1 591 489
- KR-B1- 100 721 008
- NL-A- 7 504 372
- US-A- 1 536 514
- US-A- 5 768 865
- US-A1- 2005 126 142
- US-A1- 2008 066 441
- US-A1- 2019 159 401

## Beschreibung

### I. Anwendungsgebiet

Die Erfindung betrifft eine Mähvorrichtung nach dem Prinzip eines Kreiselmähers - also mit in einer etwa horizontalen Ebene um wenigstens eine aufrechte Achse rotierenden Messern - zum Abmähen von Bewuchs und insbesondere auch Absaugen des Mähgutes, insbesondere der Grünflächen neben Fahrbahnen. Es soll besonderes Augenmerk auf den Schutz von Klein-Lebewesen im Bewuchs, wie etwa Insekten, Würmer, aber auch kleine vierbeinige Tiere, gelegt werden, die sich direkt am Bewuchs befinden können oder auf dem Untergrund zwischen dem Bewuchs.

### II. Technischer Hintergrund

Die verschiedenen, im gewerblichen Einsatz benutzten Arten von Kreiselmähern - die in aller Regel mehrere Messereinheiten in Querrichtung nebeneinander aufweisen, insbesondere mindestens ein Paar von Messereinheiten -besitzen unterschiedliche Vorteile und Nachteile:
Bei einem sogenannten Trommelmäher sind die um eine aufrechte Achse rotierenden Messer am unteren Ende eines aufrecht stehenden Zylinders, der so genannten "Trommel", befestigt, die mit den Messern mitrotieren. Quer zur Fahrtrichtung sind mindestens 2, meist deutlich mehr, Trommeln angeordnet, die jeweils an einem darüber verlaufenden Antriebbalken befestigt und von diesem aus angetrieben werden, meist von einem gemeinsamen Antrieb aus.

Gerade bei hohem Bewuchs besteht deshalb die Gefahr des Umwickelns der Trommel mit Mähgut.

Eine an einer Trommel befestigte Schneideinheit besteht aus einem Messergehäuse und den Messern, die dabei nur eine geringe Länge aus einem horizontalen Spalt des mit der Trommel mitrotierenden Messergehäuses nach außen ragen. Das Messergehäuse wird durch zwei mit ihrer unten bzw. oben offener Seite gegeneinander weisende Gehäuse-Schalen gebildet.

Bei einem sogenannten Scheibenmäher sind analog ausgebildete, jedoch meist kleinere und leichtere, Schneideinheiten auf einem unter den Messereinheiten quer zur Fahrtrichtung verlaufenden Antriebsbalken mit möglichst geringem Abstand hierzu oder ohne Abstand darauf montiert und von diesem aus angetrieben.

Die dazwischen befindlichen Trommeln sind deshalb nicht vorhanden oder in axialer Richtung extrem kurz und die scheibenförmigen Messergehäuse rotieren in der Regel mit den Messern mit, so dass die Gefahr des Umwickelns der Messereinheit mit dem über der Abtrennstelle vorhandenen langen Mähgut kaum gegeben ist.

Das Gesamtgewicht ist dadurch geringer als bei einem Trommelmäher und es können größere Mähbreiten erreicht werden.

Bei beiden Bauformen sind zwei nebeneinander angeordnete Messereinheiten meist gegenläufig drehend angetrieben, so dass zusätzlich eine Schwadbildung dazwischen erfolgt und gleichzeitig eine definierte Abtransportrichtung des Mähgutes im Bereich zwischen den beiden Messereinheiten nach hinten, also entgegen der Fahrtrichtung, gegeben.

Ebenso ist es bei beiden Bauformen üblich, dass die Messer um eine aufrechte Achse gelenkig an einem rotierenden Messerträger befestigt sind, um beim Auftreffen auf einem harten Hindernis diesem ausweichen zu können.

Bei einem sogenannten Sichelmäher rotiert pro Messereinheit ein an einer seiner Längskanten scharf geschliffenes Balkenmesser um eine aufrechte Achse, an welcher es mit seiner Mitte befestigt ist. Die Achse ist durch eine rotierende, aufrecht stehende Welle realisiert. Ein das Balkenmesser oder die stehende Welle umgebendes Messergehäuse ist nicht vorhanden.

Der Messerbalken besitzt in der Regel den Querschnitt eines liegenden, flachen Rechtecks, besteht also aus einem Flachmaterial, und besitzt häufig einen von der Schneidkante nach hinten ansteigenden Anstellwinkel, um einen Luftstrom nach oben in Richtung einer dort vorhandenen Auslassöffnung aus dem Mähkopf-Gehäuse zu bewirken.

Bei allen Bauformen soll eine Luftströmung erzeugt werden, die Luft durch die Vorderseite und Unterseite des Mähkopfes ansaugt, wodurch Kleinlebewesen im Bewuchs, selbst wenn sie sich unterhalb der Mäh-Höhe befinden, mit angesaugt und meist getötet werden. Gerade bei einem Sichelmäher kann zu diesem Zweck der Messerbalken an seinem in Rotationsrichtung hinteren Ende eine Aufkröpfung schräg nach oben besitzen, die einerseits der Mitnahme des abgewählten Mähgutes dient, andererseits aber auch einer nach oben gerichteten Luftströmung.

Dies gilt erst recht, wenn das Mähkopf-Gehäuse eine Auslassöffnung besitzt, an welche eine Unterdruck-Leitung angeschlossen ist zum Absaugen des Mähgutes zwecks sammeln in einem Abtransport-Behälter.

Bei einem Absaugen des Mähgutes ist es ferner wichtig, dass das Mähgut möglichst kleinteilig ist, also bei einem hohen Bewuchs das Mähgut nicht nur an einer Stelle abgetrennt, sondern gleichzeitig auch zerkleinert wird, möglichst ohne zusätzlich zu den Messereinheiten noch eine separate Zerkleinerungseinheit auf dem Weg in den Abtransport-Behälter vorsehen zu müssen.

Das Zerkleinern ist auch beim sogenannten Mulchen erforderlich, welches darin besteht, dass das Mähgut nicht abtransportiert, sondern möglichst gut zerkleinert auf dem Untergrund liegen gelassen und als natürlicher Dünger verwendet wird.

Häufig ist die Mähvorrichtung als Mähkopf mit die Messereinheiten umgebendem Gehäuse ausgebildet, und dadurch auch am vorderen freien Ende eines Auslegerarmes, der von einem Trägerfahrzeug getragen wird, befestigbar.

Die den nächstreichenden Stand der Technik bildende DE 102015006065 A1 zeigt den Oberbegriff des Anspruchs 1. Hinsichtlich der Luftführung beabsichtigt diese Schrift jedoch genau das Gegenteil gegenüber der vorliegenden Beschreibung, nämlich durch aktives Ansagen von Luft unter dem Bodenblech und danach vertikales Abführen nach oben möglichst viel Luft von vorne her anzusaugen.

Auch die weiter ab liegenden Schriften US 5768865 B, US 2008/0066441 A1 sowie US 2005/01 26142 A1 zeigen maximal den Oberbegriff des Anspruchs 1.

### III. Darstellung der Erfindung

### a) Technische Aufgabe

Es ist daher die Aufgabe gemäß der Erfindung, einen Mähkopf nach dem Prinzip eines Kreiselmähers zur Verfügung zu stellen, der auch zum Absaugen und Abtransportieren des Mähgutes geeignet ist, das Mähgut zerkleinert und Kleinlebewesen im Bewuchs schont, sowie ein Verfahren zum Betreiben eines solchen Mähkopfes.

### b) Lösung der Aufgabe

Diese Aufgabe wird durch die Merkmale des Anspuchs 1 gelöst. Vorteilhafte Ausführungsformen ergeben sich aus den Unteransprüchen.

Ein gattungsgemäßer Kreisel-Mähkopf besitzt ein Mähkopf-Gehäuse, in dem mindestens eine Messereinheit angeordnet ist, vorzugsweise in Querrichtung zur Mährichtung, der Fortschrittsrichtung oder Fahrtrichtung eines Mäh-Fahrzeuges, nebeneinander mehrere Messereinheiten angeordnet sind, wobei jede Messereinheit eine aufrecht stehende, rotierende Messerwelle umfasst, an der drehfest wenigstens ein Messer befestigt ist.

An der Messerwelle sind die Messer oft nicht direkt befestigt, sondern an der Messerwelle ist ein Messerträger drehfest befestigt, und an jedem Messerträger sind dann ein oder mehrere Messer schwenkbar um eine aufrecht stehende Schwenkachse befestigt, so dass also die Messer mit dem Messerträger mit rotieren. Die Messerwellen sind von einem Mäh-Antrieb, der einen Motor aufweist, welcher vorzugsweise oberhalb des Mähkopf-Gehäuses angeordnet ist, rotierend angetrieben.

Bei mehreren Messereinheiten sind diese meist paarweise eingesetzt: Durch gegenläufige Rotationsrichtung, die zwischen den beiden Messereinheiten entgegen der Mährichtung nach hinten gerichtet ist, kann das Mähgut nach hinten gut abtransportiert werden. Erfindungsgemäß bevorzugt ist nur ein Paar von Messereinheiten vorhanden.

Hinsichtlich der Luftströmung besteht das Ziel darin, einen möglichst großen Anteil der Luft nicht durch die im wesentlichen offene Vorderseite des Gehäuses anzusaugen, da hierbei Klein-Lebewesen, die sich im Bewuchs oder am Boden dazwischen aufhalten, mit angesaugt würden.

Stattdessen wird versucht, die Luft durch das Dach im vorderen Bereich, also vor den Messerwellen, in das Gehäuse strömen zu lassen, und von dort nach hinten und zur Absaugöffnung in der Rückwand strömen zu lassen.

Bei einem erfindungsgemäßen Kreisel-Mähkopf wird die bestehende Aufgabe dadurch gelöst, dass ein erheblicher Teil der Unterseite des Gehäuses - das zumindest aus einem oberen Dach und einer hinteren Rückwand sowie zwei in Fahrtrichtung verlaufenden Seitenwänden besteht - durch einen Gehäuse-Boden verschlossen ist, um in dem verschlossenen Teil ein Ansaugen der Luft vom Untergrund her zu verhindern.

Dagegen ist im Dach des Gehäuses mindestens eine Luft-Ansaugöffnung vorhanden, durch die Luft in das Gehäuse gelangen kann, also entweder eingesaugt werden kann oder auch aktiv durch einen in strömungstechnischer Verbindung mit der mindestens einen Luft-Ansaugöffnung stehendem Luftstromerzeuger wie einem Gebläse in das Gehäuse hineingedrückt werden kann.

Da vorzugsweise auch die Seitenwände geschlossen sind, wird nur ein geringer Teil der Luft, die zusammen mit dem Mähgut mittels der Rotation der Messer nach hinten abgeführt wird, durch die offene Vorderseite und/oder durch die offene Unterseite des Mähkopfes angesaugt, was ja gerade die Gefahr birgt, dass sich in einer von dort angesagten Luft die zu schonenden Klein-Lebewesen befinden.

Dieser Gehäuse-Boden erstreckt sich von der Unterkante der Rückwand aus in Mährichtung möglichst weit nach vorne, darf jedoch das abtrennen des Bewuchses nicht behindern. Deshalb erstreckt sich der Boden nach vorne mindestens bis zu den Rotationsachsen der Messereinheiten, wobei jedoch in der Aufsicht betrachtet die Flugkreise der Messer in der vorderen Hälfte der Flugkreise noch über die Vorderkante des Bodens vorstehen müssen, damit ein Abmähen über die gesamte Breite der beiden Messereinheiten erfolgt.

Hierfür müssen die Messer zumindest mit Ihrem radial äußeren Endbereich über die Vorderkante des Bodens vorstehen.

Falls die Messer an einem rotierenden Messerträger befestigt sind, können in der Aufsicht von unten betrachtet die Flugkreise der Messerträger vollständig von dem Gehäuse-Boden abgedeckt sein.

Vorzugsweise besitzt die Vorderkante des Bodens deshalb keinen geraden Verlauf, sondern weist im Bereich der Messereinheiten in Richtung nach vorn weisende Vorsprünge auf.

In der Aufsicht betrachtet sind damit die hinteren zumindest 40 %, besser 50 %, besser 60 % der Grundfläche des Gehäuses von dessen Boden verschlossen.

Das Dach des Mähkopf-Gehäuses ist - von der Seite, also in Breiten-Richtung, betrachtet - vom mittleren Bereich aus nach vorne und hinten ansteigend ausgebildet, besitzt also eine konkav gebogene Oberseite. Dadurch wird Luft, die vor dem mittleren Bereich ins Innere des Gehäuses gelangt, beim Lufttransport nach hinten durch die Verringerung der Höhe des Daches und damit des freien inneren Querschnittes im mittleren Bereich beschleunigt, was den Abtransport des Mähgutes fördert.

Zu diesem Zweck sind vorzugsweise im Vorderteil des Gehäuses, also vor dem abgesenkten mittleren Bereich und/oder vor den Durchlassöffnungen für die Messerwellen im Dach, großflächige Luft-Ansaugöffnungen vorhanden, die so groß gewählt sind, dass sie die benötigte Menge an Zuluft hindurch treten lassen können mit einem möglichst geringen Luftwiderstand. Insbesondere kann in diesem vorderen Bereich das Dach auch vollständig fehlen.

Vorzugsweise beträgt die Gesamtfläche dieser dortigen Luft-Ansaugöffnungen mindestens 10 %, besser mindestens 20 % der in der Aufsicht betrachteten Gesamtfläche des Daches.

Damit die Luftströmung zu diesen Luft-Ansaugöffnungen außerhalb des Mähkopf-Gehäuses nicht vor dem Mähkopf beginnt, sondern vom hinteren Bereich des Mähkopfes aus angesaugt wird, ist vorzugsweise oberhalb der Luft-Ansaugöffnungen ein Luft-Leitblech angeordnet, welches in der Aufsicht betrachtet die Luft-Ansaugöffnungen abdeckt und mit seiner vorderen Kante auf der Oberseite des Daches vor den Luft-Ansaugöffnungen dicht befestigt ist.

Dadurch kann die Luft nur von der Oberseite des hinteren Bereiches des Daches aus unter das Leitblech hinein und durch die Luft-Ansaugöffnungen in das Gehäuse gelangen.

Zusätzlich können im hinteren Teil des Daches, also hinter den Durchlassöffnungen für die Messerwellen, ebenfalls Luft-Durchtrittsöffnungen vorhanden sein, deren Fläche jedoch gegenüber denen der Luft-Ansaugöffnungen wesentlich kleiner ist, insbesondere in Summe höchstens 20 %, besser höchstens 10 % der Gesamtfläche der Luft-Ansaugöffnungen im vorderen Bereich des Daches betragen.

Um eine Ansaugung von Luft durch die offene Frontseite des Gehäuses zusätzlich zu erschweren, kann dort ein an sich bekannter Front-Vorhang angeordnet werden, der im Stand der Technik primär als Schleuder-Schutz zum Zurückhalten von weggeschleuderten Gegenstände dient.

Im vorliegenden Fall soll der Front-Vorhang primär einen hohen Luftwiderstand gegen Ansaugen der Luft von vorne bieten, was primär bereits durch den hoch stehenden und meist eng stehenden Bewuchs geboten wird, der aber nicht immer gleich dicht ist.

Zu diesem Zweck sollte der Front-Vorhang aus einem leichten, elastischen Material bestehen, um den Bewuchs nicht dauerhaft niederzudrücken, und könnte beispielsweise aus in Querrichtung nebeneinander angeordneten herabhängenden Lamellen eines solchen Materials bestehen, die in Querrichtung aneinander anschließen oder gar überlappen-Vorzugsweise sind die Messer nicht direkt an der Messerwelle befestigt, sondern jede Messereinheit umfasst einen an der rotierbaren Messerwelle drehfest befestigten Messerträger, an dem abseits seiner Rotationsachse mehrere Messer, vorzugsweise schwenkbar um eine aufrecht stehende Schwenkachse, befestigt sind.

Dadurch wird das Wechseln der Messer erleichtert, da der Messerträger im Mähkopf verbleiben kann.

Die rotierende Messerwelle kann von einem stillstehenden, nicht mit der Messerwelle rotierenden, Schutzrohr umgeben sein. Dadurch können sich keine Gräser oder anderes Mähgut um die rotierende Messerwelle wickeln.

Um das Herumwickeln von Gras um die Messerwelle zuverlässig zu verhindern, deckt das Schutzrohr den Abstand von der Unterseite des Daches des Mähkopf-Gehäuses bis auf die Höhe der Messer herab vollständig ab und/oder umgibt die Messerwelle in Umfangsrichtung vollständig.

Falls unterhalb der Höhe der Messer ein unterer Tragbalken vorhanden ist, der sich befestigt an den Seitenwänden zwischen diesen in Querrichtung erstreckt, und in dem die rotierenden Messerwellen mit ihrem freien unteren Ende zusätzlich gelagert sind, ist auch der Teil der Messerwellen zwischen der Höhe der Messer und dem unteren Tragbalken vorzugsweise von einem solchen nicht mit rotierenden, also stillstehenden, Schutzrohr abgedeckt

Am Mähkopf kann auch eine Scheuch-Vorrichtung vorhanden sein, um Klein-Lebewesen, die sich im Mähgut aufhalten, durch Kontaktieren von dem Bewuchs abzustreifen oder aufzuscheuchen und zur Flucht zu bewegen, bevor sie von den Messern des Mähkopfes erfasst werden.

Zu diesem Zweck ist ein Scheuch-Element vor dem Mähkopf vorhanden oder positionierbar, wobei es sich insbesondere um in der Breitenrichtung schmale - also maximal 3 cm, besser maximal 2 cm, besser maximal 1 cm, besser maximal 0,5 mm breite - aufrecht verlaufende Elemente wie Stäbe oder herabhängende flexible Teile wie eine Kette oder einem Draht handeln kann, um dem Mähgut nur einen geringen Widerstand entgegenzusetzen.

Diese Scheuch-Elemente sind vorzugsweise verteilt über die gesamte Breite des Mähkopfes vorhanden und mit einem so geringen Abstand, dass Tiere einer vorgegebenen minimalen Größe noch zuverlässig kontaktiert werden können.

Die Scheuch-Elemente ragen nach unten bis nahe an den Boden, so dass der Abstand zum Boden maximal 5 cm, besser maximal 3 cm, besser maximal 1 cm beträgt und bei flexiblen Scheuch-Elementen wie Ketten diese auch auf dem Boden schleifen können.

Vorzugsweise sind die Scheuch-Elemente an dem die frei endenden Schenkel verbindenden Querschenkel eines verschwenkbaren oder verschiebbaren, in der Aufsicht betrachtet U-förmigen, Haltebügels befestigt, der mit den freien Enden seiner frei endenden Schenkel an den Außenseiten des Mähkopf-Gehäuses schwenkbar um eine horizontale, in Querrichtung verlaufende Schwenkachse befestigt sein kann.

In der nach vorn geschwenkten oder geschobenen, aktivierten Lage des Haltebügels befindet sich dessen Querstrebe mit Abstand vor dem restlichen Mähkopf-Gehäuse und die Scheuch-Elemente hängen dort herab. Im nach hinten geklappten deaktivierten Zustand befindet sich die Querstrebe mit den Scheuch-Elementen oberhalb oder hinter dem Mähkopf-Gehäuse als Transportzustand.

Die Scheuch-Vorrichtung, insbesondere die Scheuch-Elemente, können mit dem Front-Vorhang funktionsvereinigt in einem einzigen Bauteil ausgebildet sein.

Die Messerträger sind meist eben, insbesondere plattenförmig, gestaltet, so dass sie aus einer ebenen Platte ausgeschnitten werden können. Dies vereinfacht und verbilligt die Herstellung.

Die Messerträger besitzen meist ein Zentralteil, mit dem der Messerträger an der rotierenden Messerwelle befestigt werden kann, und von dem Zentralteil radial abstrebende Tragarme, die über den Umfang des Zentralteiles meist gleichmäßig verteilt sind, und an deren Enden mindestens ein Messer befestigbar ist und befestigt ist.

Dadurch können die Messer einerseits beim Anprall an einem festen Hindernis diesem ausweichen durch Verschwenken gegenüber dem Messerträger, und wenn die Messer stumpf werden, müssen lediglich die Messer demontiert und nachgeschliffen werden, während der Messerträger im Mähkopf verbleiben kann. Vorzugsweise sind die Messer des Mähkopfes auf mindestens zwei in unterschiedlichen Höhenlagen befindlichen Messerebenen verteilt angeordnet.

Eine Messerebene wird definiert durch die Schneidkanten derjenigen Messer oder die äußeren Enden der Schneidkanten derjenigen Messer, die auf der gleichen Höhenlage, also Axialposition, bezüglich der Messerwelle um diese rotieren.

Dadurch wird das Mähgut auf diesen mindestens zwei Höhenlagen durchtrennt und somit gleichzeitig zerkleinert, was entweder das Absaugen des Mähgutes erleichtert oder für das Mulchen vorteilhaft ist, wenn das Mähgut auf dem Untergrund liegen bleiben soll.

Dabei können auch die Messer einer einzigen Messereinheit auf mindestens zwei verschieden hoch liegenden Messerebenen verteilt angeordnet sein, was sicherstellt, dass das in den Wirkbereich dieser Messereinheit geratende Mähgut auf zwei verschiedenen Höhen durchtrennt wird.

Dabei können insbesondere am gleichen Tragarm eines Messerträgers Messer in zwei verschiedenen Höhenlagen befestigt sein, die dann insbesondere um die gleiche Schwenkachse schwenkbar sind, was die Konstruktion und die Montage vereinfacht. Vorzugsweise sind die beiden Messer unabhängig voneinander um die Schwenkachse gegenüber dem Messerträger verschwenkbar.

Dadurch kann beispielsweise das untere Messer ausweichen, wenn es an ein festes Hindernis stößt, welches jedoch nicht so hoch ist, dass das obere Messer damit in Kontakt kommt.

Dabei kann jedoch auch an einem Tragarm nur je ein Messer befestigt sein, an den verschiedenen Tragarmen einer Messereinheit die Messer jedoch wieder auf zwei verschiedenen hoch liegenden Messerebenen verteilt angeordnet sein.

Auch dadurch wird Mähgut, welches in den Wirkbereich dieser Messereinheit gelangt, auf zwei verschiedenen Höhen durchtrennt, aber wegen der gegenüber der vorbeschriebenen Lösung halbierten Anzahl von Messern - bei gleichbleibender Anzahl von Tragarmen - ist der Zerkleinerungseffekt weniger stark.

Vorzugsweise weist der Messerträger eine gerade Anzahl von Tragarmen hinauf, und dann empfiehlt sich bei einer Verteilung der Messer auf zwei Messerebenen, in Umfangsrichtung des Messerträgers die Messer an den einzelnen Tragarmen abwechselnd einmal auf der unteren und einmal auf der oberen Messerebene anzuordnen, um ein gleichmäßiges Zerkleinern des Mähgutes zu erreichen.

Es ist jedoch möglich, innerhalb einer Messereinheit die Messer alle in der gleichen Höhenlage, also in der gleichen Messerebene, anzuordnen, die Messer der einem Messereinheit jedoch in einer Messerebene mit einer anderen Höhenlage als die Messer der anderen Messereinheit.

Vor allem im Bereich zwischen den Messereinheiten ist dann immer noch die Wahrscheinlichkeit sehr groß, dass das Mähgut nicht nur abgeschnitten, sondern zerkleinert wird.

Vorzugsweise sind die beiden Messereinheiten unabhängig voneinander angetrieben, besitzen also getrennte Mäh-Antriebe und vorzugsweise jeweils einen Motor, der meist direkt auf der das Dach des Mähkopf-Gehäuses durchdringenden rotierenden Messerwelle mit seiner Motor-Antriebswelle drehfest befestigt ist. Damit sind Maßnahmen zur Transmission der Antriebsleistung zwischen den Messereinheiten überflüssig und auch jede Art von Synchronisierung, nicht nur hinsichtlich der Drehzahl, sondern auch hinsichtlich der Drehlage der Messer der einzelnen Messereinheiten.

Damit in der gleichen Höhenlage, also insbesondere in der gleichen Messerebene, rotierende Messer zweier benachbarter Messereinheiten im Bereich zwischen den Messereinheiten nicht kollidieren können, besteht in der Aufsicht betrachtet ein Abstand, der so genannte Freigang, zwischen den Flugkreisen zweier benachbarter Messereinheiten.

Wenn die Messer auf zwei verschiedenen Höhen, insbesondere Messerebenen, rotieren und in jeder Messerebene Messer beider Messereinheiten vorhanden sind, ist vorzugsweise der Freigang der oberen Messerebene zum Freigang der unteren Messerebene in Querrichtung zur Mährichtung soweit versetzt, dass sich die Freigänge nicht überlappen.

Dadurch ist ein zuverlässiges Abschneiden des Mähgutes auch im Breitenbereich zwischen den Messereinheiten sichergestellt, so dass also kein "Bart" an nicht gemähtem Mähgut stehen bleibt.

Wenn dagegen keine übereinstimmende Messerebene existiert, in der die Messer beider Messereinheiten rotieren und damit kollidieren könnten, so können die Flugkreise der einem Messer Reinheit mit den einen oder mehreren Flugkreisen der anderen Messereinheit in Querrichtung überlappen.

Eine andere oder auch ergänzende Möglichkeit besteht darin, dass in der Aufsicht betrachtet in Mährichtung vor einem Freigang und insbesondere in der Höhe des Freiganges zwischen zwei Messereinheiten eine Leiteinrichtung vorgesehen wird, deren Breite in Querrichtung größer ist als der Freigang. Damit drückt diese Leiteinrichtung daran anstoßendes Mähgut zuverlässig in den Wirkbereich einer der beiden Messereinheiten.

Dabei sollte die Leiteinrichtung so knapp wie möglich in Fahrtrichtung vor den Flugkreisen der beiden Messereinheiten angeordnet sein, insbesondere mit weniger als 5 cm, besser weniger als 3 cm, besser weniger als 1 cm freiem Abstand dazwischen, um ein Zurückbewegen des Mähgutes in den Freigang hinein zu vermeiden.

Vorzugsweise besteht eine Leiteinrichtung aus einem in der Aufsicht betrachtet sich von vorne nach hinten verbreiternden, insbesondere V-förmigen Element, insbesondere einem in der Aufsicht betrachtet V-förmigen Leitblech.

Um Probleme mit dem Freigang zu vermeiden, können die Messereinheiten, deren Messerwellen und damit Rotationsachsen ja in Querrichtung zueinander versetzt sind, zusätzlich auch in Mährichtung zueinander versetzt sein.

Dadurch ist es möglich, in Querrichtung die Messerwellen so zu beabstandeten, dass sich die Flugkreise benachbarter, der insbesondere nur zwei Messereinheiten, in Querrichtung überlappen, aber aufgrund des Versatzes in Mährichtung dennoch einen Abstand zueinander einnehmen.

Um Klein-Lebewesen, die sich im Mähgut in Bodennähe aufhalten auch nicht durch eine in Querrichtung verlaufende Boden-Abtastwalze zu kontaktieren, sind stattdessen an den Unterseiten der Seitenwände schmale Gleitkufen ausgebildet, die auch Rollkörper enthalten können, wobei die Gleitkufen, insbesondere deren Rollkörper, eine Breite von maximal 6 cm, besser maximal nur 4 cm, besitzen.

Zusätzlich oder alternativ zu solchen Gleitkufen kann der Mähkopf mithilfe eines gegen den Untergrund gerichteten, berührungslos arbeitenden Abstands-Sensors, beispielsweise eines Ultraschall-Sensors oder Radar-Sensors, in der richtigen Höhe über dem Untergrund gesteuert werden, sodass dieser den Untergrund überhaupt nicht berühren muss.

Ein solcher berührungsloser Abstands-Sensor kann sich auf der Außenseite des Gehäuses des Mähkopfes befinden, beispielsweise an der Außenseite der Rückwand befestigt sein, oder auch im Inneren des Gehäuses, jedenfalls vorzugsweise auch dort an einer solchen Stelle, dass der von dem Abstands-Sensor in aller Regel abgegebene Strahl von elektromagnetischer Strahlung in dem Bereich auf dem Untergrund auftrifft, der bereits gemäht wurde.

Da man Veränderungen des Untergrundes jedoch möglichst im Vorfeld erfassen will, sollte ein solcher Abstands-Sensor möglichst weit vorn am Gehäuse angeordnet sein, und im Idealfall so ausgelegt sein, dass er nicht nur in dem bereits gemähten Bereich den Untergrund abtasten kann, sondern auch davor im noch ungemähten Bereich.

Hierzu kann dieser Strahl auch durch eine hierfür vorgesehene Öffnung im Boden des Gehäuses hindurch verlaufen und/oder er kann sich auch durch den Bewegungsweg eines Messers hindurch verlaufen, da mittels einer Steuerung eine Untergrundabtastung gezielt immer dann möglich ist, wenn gerade kein Messer den Strahlengang des Sensors kreuzt.

Vorzugsweise ist der Mähkopf am vorderen, freien Ende eines Auslegerarmes befestigt, der mit seinem hinteren Ende auf einem Trägerfahrzeug montiert ist, welches die Vorwärtsbewegung des Mähkopfes bewirkt.

Hinsichtlich des Verfahrens wird die bestehende Aufgabe dadurch gelöst, dass, insbesondere unter Verwendung des beschriebenen, erfindungsgemäßen Mähkopfes, der Mähkopf wenigstens ein Paar mit zwei benachbarten Messereinheiten aufweist, und die Messereinheiten gegenläufig angetrieben sind, sodass im Bereich zwischen den beiden Messereinheiten eines Paares sich die Messer oder die Messerträger mit daran befestigten Messern entgegen der Fortschrittsrichtung nach hinten bewegen. Dadurch wird der Abtransport des Mähgutes in Richtung Absaug-Öffnung gefördert.

Dabei können die Messereinheiten etwa gleich schnell angetrieben werden, wobei die Drehlagen ihrer Messer oder Messerträger nicht synchron gesteuert werden müssen, sodass also an der Stelle des geringsten Abstandes zwischen den beiden benachbarten Messereinheiten sich deren jeweilige Messer oder Messerträger nicht genau gegenüberstehen müssen. Dies vereinfacht die Steuerung und den Antrieb der Messereinheiten ohne das Mäh-Ergebnis negativ zu beeinflussen.

Insbesondere können die beiden Messereinheiten vollkommen unabhängig voneinander angetrieben werden, insbesondere über getrennte Motore, was den konstruktiven Aufbau vereinfacht.

Vorzugsweise wird die Fortschrittsgeschwindigkeit des Mähkopfes im Betrieb und die Drehzahl, insbesondere die verschiedenen Drehzahlen, der Messereinheiten so gesteuert, dass zwar der Bewuchs wie gewünscht abgemäht wird, aber der durch den Betrieb des Mähkopfes im Gehäuse erzeugte Unterdruck möglichst gering gehalten wird.

### c) Ausführungsbeispiele

Ausführungsformen gemäß der Erfindung sind im Folgenden beispielhaft näher beschrieben.

Es zeigen
- **Figur 1:**: den erfindungsgemäßen Mähkopf in perspektivischer Ansicht,
- **Figur 2a:**: den Mähkopf der Figur 1 in der Aufsicht von oben,
- **Figur 2b:**: den Mähkopf der Figur 1 von vorne,
- **Figur 2c:**: den Mähkopf gemäß Figur 1 in der Ansicht von unten,
- **Figur 2d:**: den Mähkopf der Figur 1 in der Seitenansicht,
- **Figur 3a:**: den Mähkopf der Figur 1 in der Seitenansicht, teilweise geschnitten in Längsrichtung,
- **Figur 3b:**: den Mähkopf gemäß Figur 1 in der Ansicht von vorne ohne Front-Vorhang

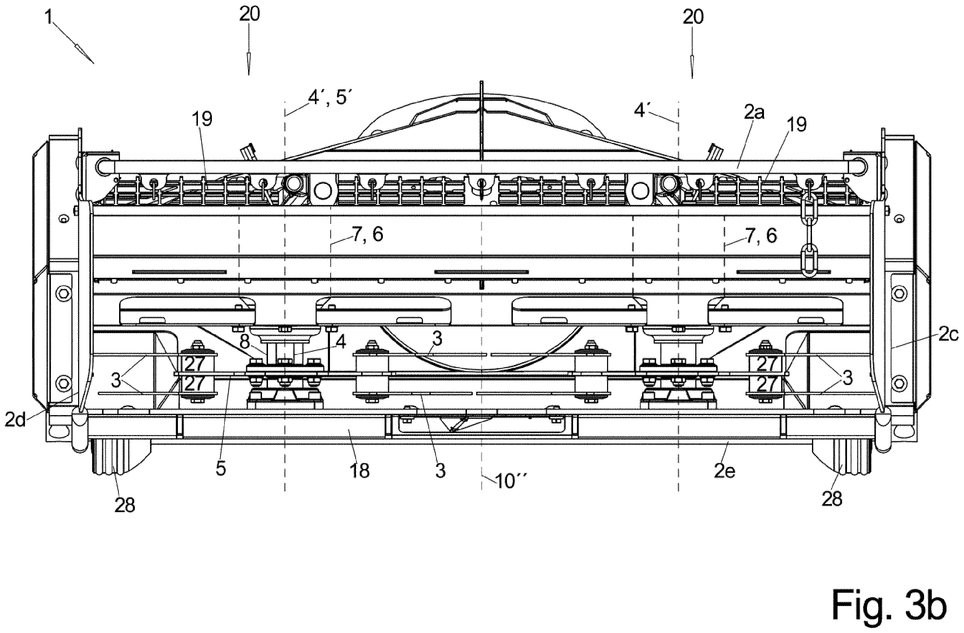

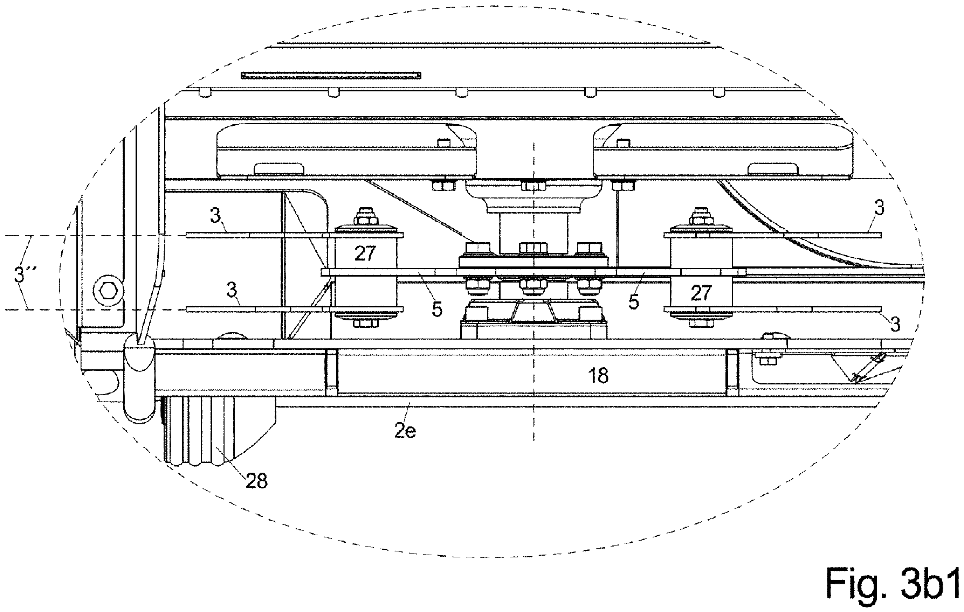

- **Figur 3b1:**: eine Vergrößerung aus Figur 3b,

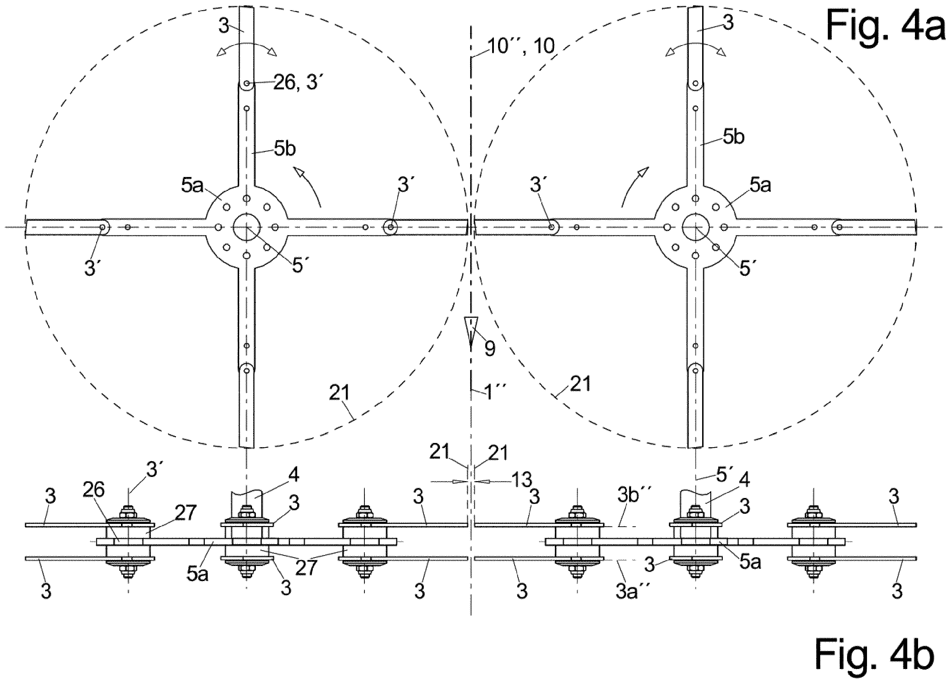

- **Figur 4a, b:**: eine erste Möglichkeit der Messer-Anordnung in der Aufsicht sowie in der Frontansicht,

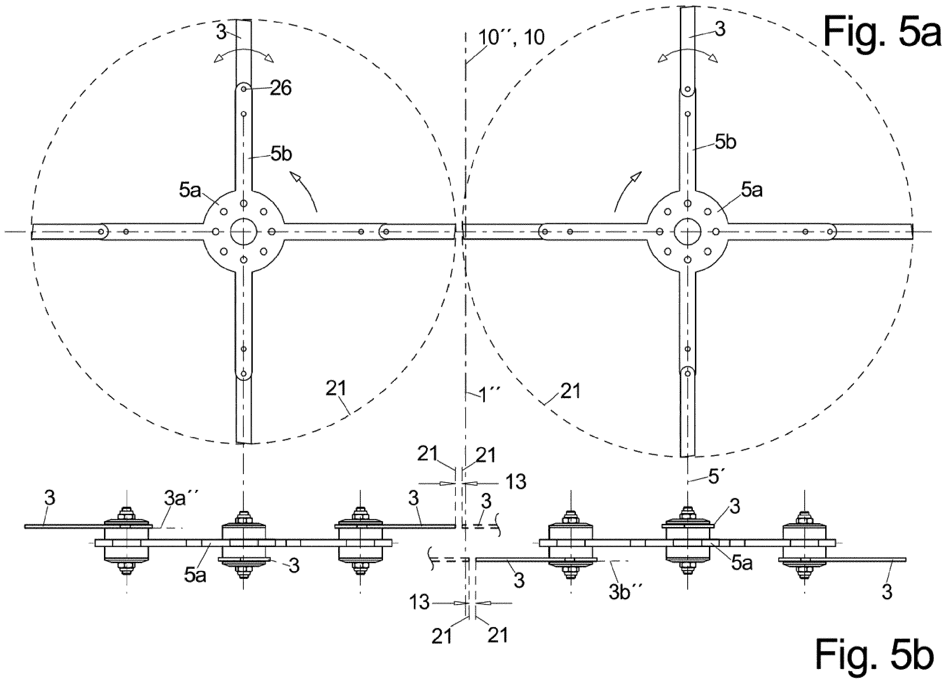

- **Figur 5a, b:**: eine zweite Möglichkeit,

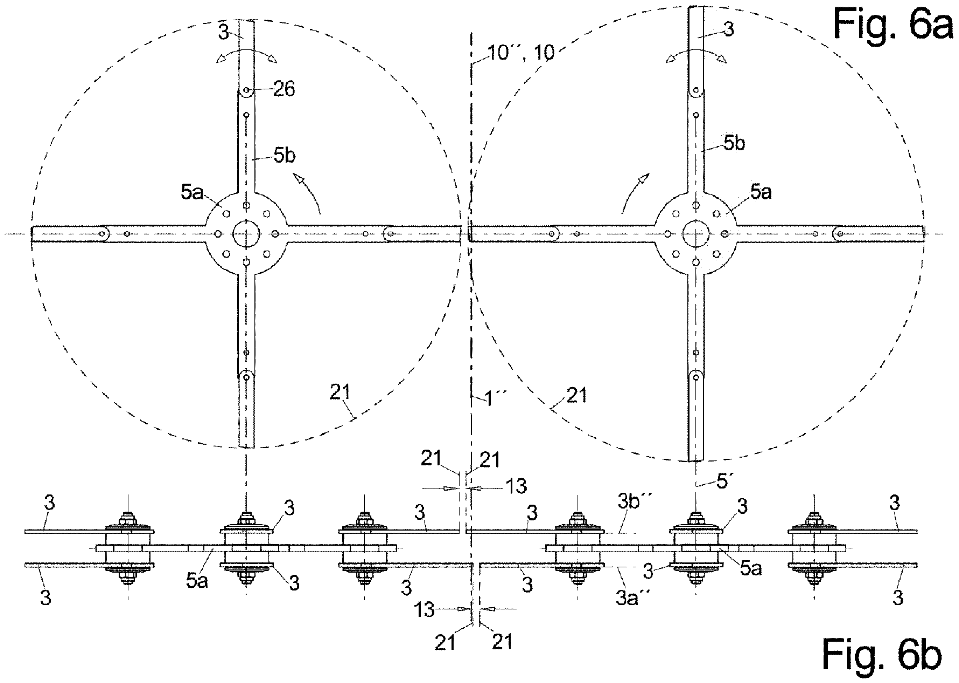

- **Figur 6a, b:**: eine dritte Möglichkeit,

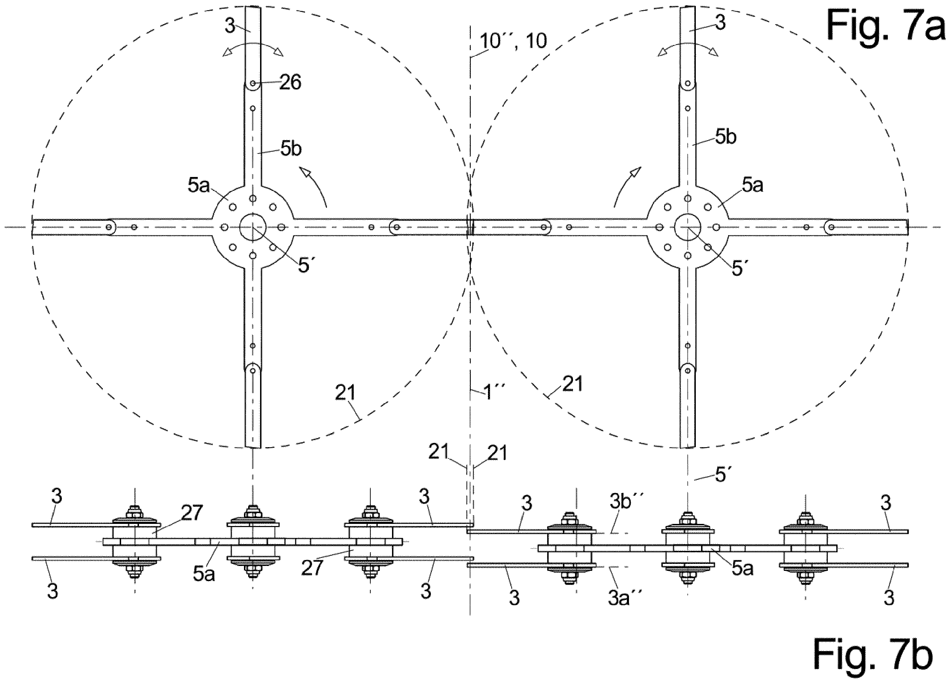

- **Figur 7a, b:**: eine vierte Möglichkeit,

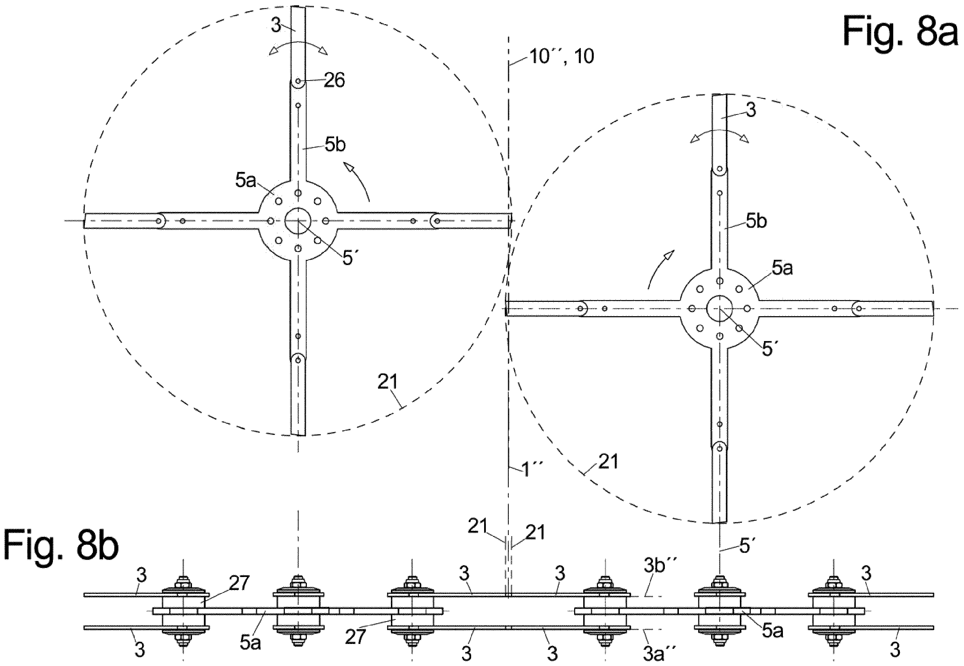

- **Figur 8a, b:**: eine fünfte Möglichkeit.

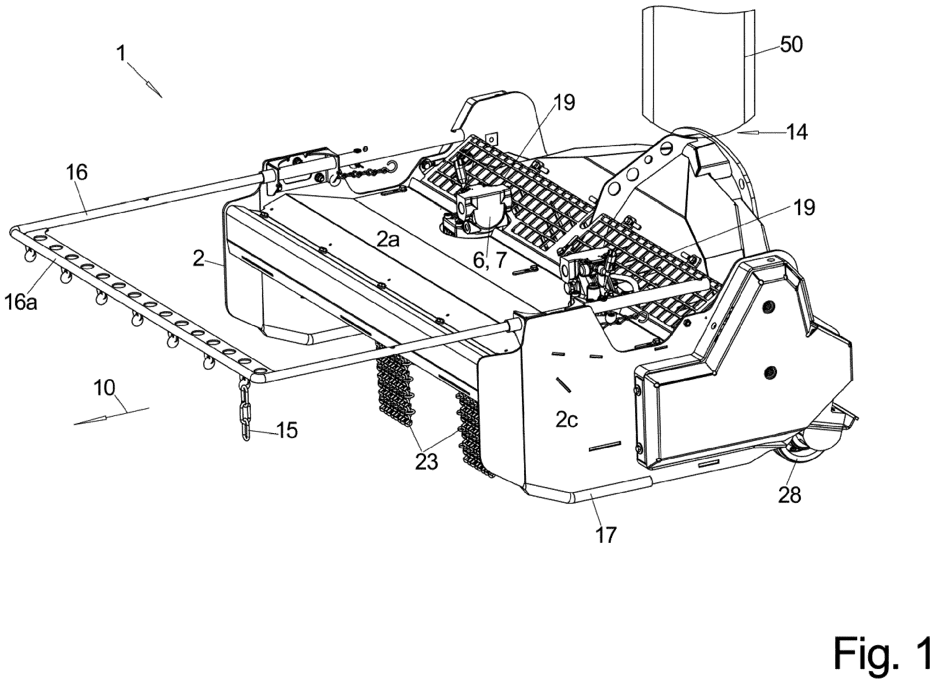

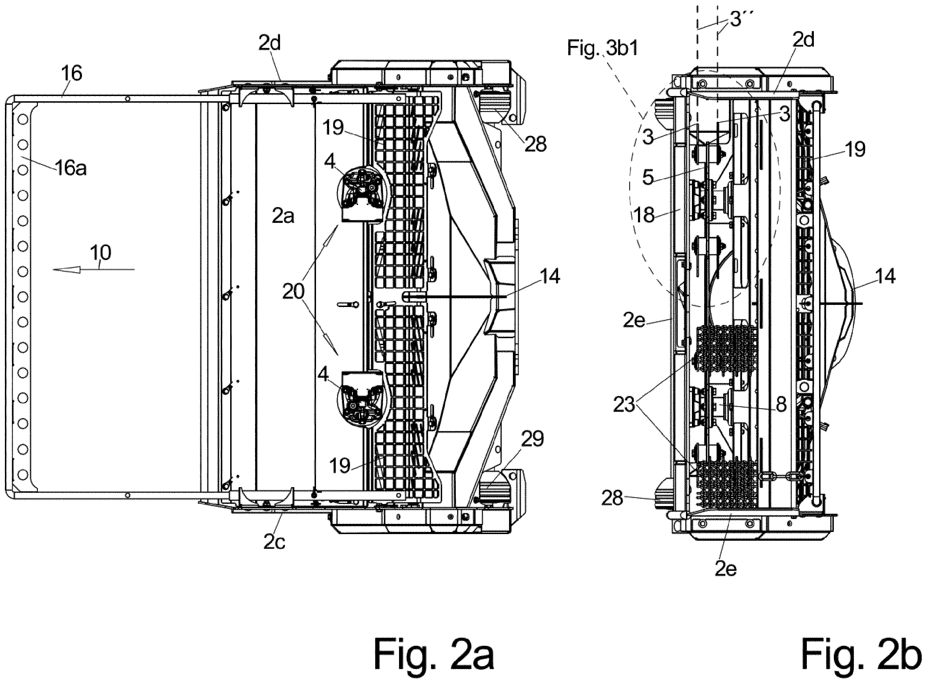

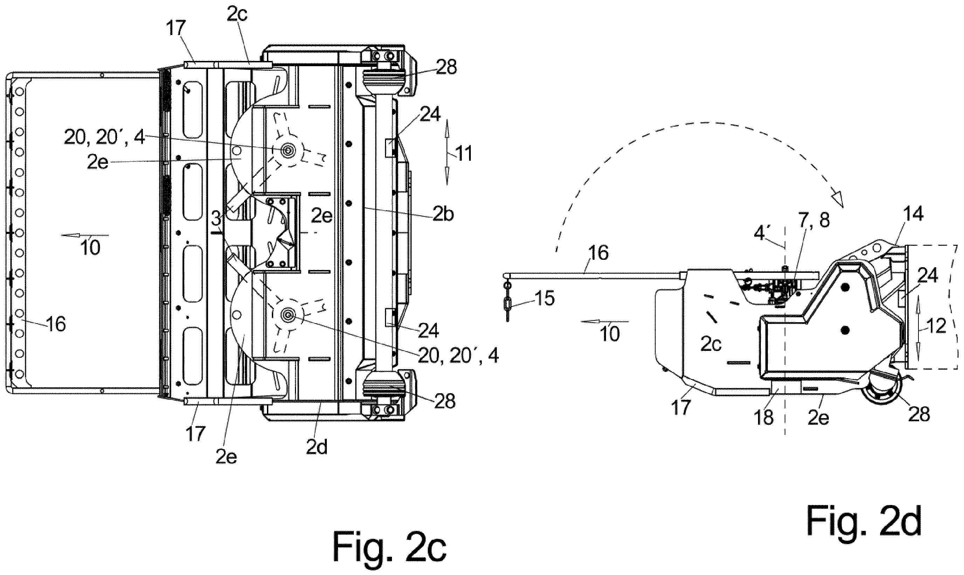

Die **Figur 1** sowie **2a** bis **d** zeigen den erfindungsgemäßen Kreisel-Mähkopf 1 perspektivisch sowie in einzelnen Ansichten von allen Seiten.

Der Mähkopf **1** besitzt zunächst die gattungsgemäßen Merkmale, wie ein Mähkopf-Gehäuse **2,** umfassend Dach **2a,** Rückwand **2b,** zwei parallel zueinander verlaufende, aufrecht stehende Seitenwände **2c, d** und einen Boden **2e.**

Die im Wesentlichen offene Frontseite ist von einem dort von der Oberseite des Gehäuses herabhängendem Front-Vorhang **23,** meist einem Ketten-Vorhang, geschlossen, der das Hinausschleudern von Teilen aus dem Gehäuse **2** verhindern soll.

Das Mähkopf-Gehäuse **2** besitzt in der Mitte seines hinteren, oberen Bereichs eine Befestigungsstelle **14** zum Befestigen an einem Auslegerarm **50,** der den Mähkopf **1** führt.

In der Rückwand **2b** befindet sich die Auslassöffnung, an die eine Absaug-Leitung **25** in Form eines flexiblen Schlauches angeschlossen werden kann, um das Mähgut zu einem mitgeführten Wagen zu blasen und darin abzulegen.

Im vorderen Bereich der Unterkanten der Seitenwände **2c, d** sind schmale, in der Aufsicht betrachtet in Längsrichtung, der Fahrtrichtung **10** verlaufende Gleitkufen **17** vorhanden, mit denen der Mähkopf **1** Kontakt zum Untergrund besitzen kann.

Zusätzlich ist im unteren Bereich am hinteren Ende des Gehäuses **2** außen, also im Breitenbereich etwa der Seitenwände **2c, d** weiterhin je eine jeweils relativ schmale Abtast-Rolle **28** vorhanden, mit der der Mähkopf **1** ebenfalls auf dem Untergrund rollen kann, jedoch keine sich über die gesamte Breite erstreckende Abtastwalze.

Vorzugsweise sind die beiden Abtast-Rollen **28** über eine Verbindungstange mechanisch miteinander gekoppelt, um über die Verbindungstange quer zur Fortschrittsrichtung auftretende Relativbewegungen zwischen den Abtast-Rollen **28** und dem Untergrund stabil in den Mähkopf **1** einzuleiten.

Das Mähwerk umfasst zwei in Breitenrichtung **11** nebeneinander angeordnete Messereinheiten **20,** die jede in einer horizontalen Ebene rotierende Messer **3** umfassen, wobei der Mäh-Antrieb **6** aus jeweils einem separaten Motor **7** für jede der beiden Messereinheiten **20** besteht, die auf der Oberseite des Gehäuses **2** und teilweise durch das Dach **2a** nach unten in das Gehäuse **2** hineinreichend angeordnet sind.

In Fahrtrichtung **10** vor dem Gehäuse **2** verläuft ein Scheuch-Element **15** in Form einer Querstrebe **16a,** die sich in der Funktionsstellung etwa auf Höhe des Daches **2a** des Gehäuses **2** befindet, mit nebeneinander daran hängenden Elementen wie Ketten oder Streifen oder Stäben, die vor allem vor dem Mähkopf **1** im Gras **G** liegende oder sitzende kleine Tiere aufscheuchen und zum Weglaufen, Wegfliegen oder sich auf den Boden fallen lassen bewirken oder veranlassen soll.

Die Querstrebe **16a** ist der verbindende Schenkel eines in der Aufsicht U-förmigen Haltebügels **16,** der um eine horizontale in Querrichtung **11** verlaufende Schwenkachse auch nach hinten auf das Dach **2a** des Gehäuses **2** geklappt werden kann, sei es für den Transport des Mähkopfes **1** oder wenn dieser an ein zu ummähendes Hindernis nahe heranfahren soll.

Weitere erfindungsgemäße Merkmale betreffen die Luftführung durch und in dem Gehäuse **2,** durch die erreicht werden soll, dass möglichst kein Ansaugen von Umgebungsluft durch die Frontseite des Gehäuses **2** hindurch erfolgen soll, denn ein solcher Luftstrom saugt auch immer Kleintiere wie etwa Käfer mit ein.

Stattdessen wird erfindungsgemäß die Luft, mit der das abgemähte Gras anschließend nach hinten der Absaug-Leitung **25** zugeführt werden soll, dem Mähkopf **1** durch eine oder mehrere Luft-Ansaugöffnungen **19** zugeführt, die -aus Sicherheitsgründen abgedeckt durch Gitter - sich im Dach **2a** des Gehäuses **2** befinden, vorzugsweise über die gesamte Breite des Daches **2a** erstreckend, und zwar in Fahrtrichtung **10** hinter der Längsposition, an der sich die Messereinheiten **20** und deren aufrecht stehende Messerwellen **4** befinden.

Das Ansaugen durch diese Luft-Ansaugöffnungen **19** kann entweder mittels der durch die Messer **3** selbst erzeugten Luftströmungen bewirkt werden oder auch durch zusätzliche Ventilatoren, die über oder unter den Gittern der Luft-Ansaugöffnungen **19** angeordnet sein können, wobei sich die Luft-Ansaugöffnungen **19** - wie am besten in **Figur 1** zu erkennen - schräg gestellt sind, also von hinten nach vorne schräg ansteigen, vorzugsweise unter einem Winkel von etwa 30° bis 45°.

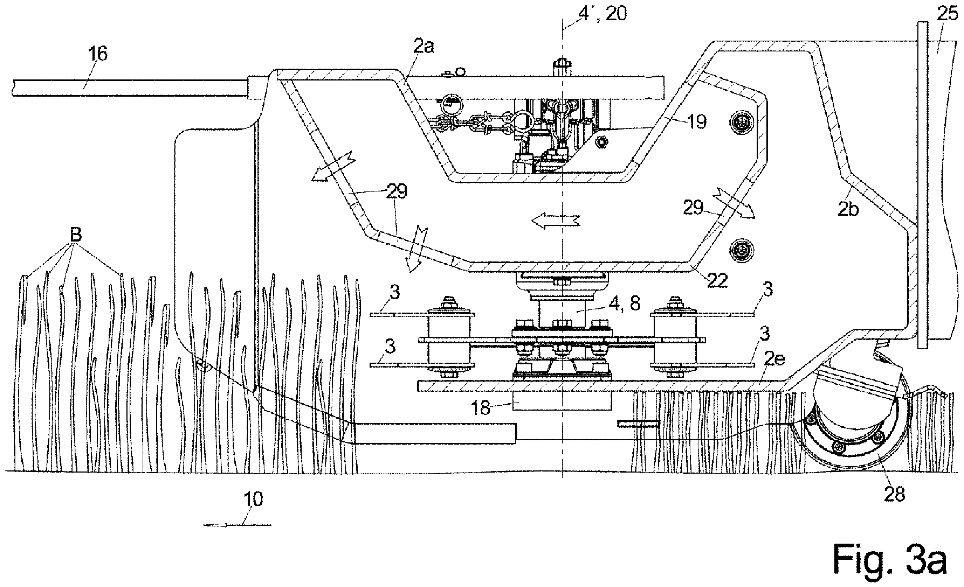

Wie am besten **Figur 3a** erkennen lässt, wird die durch die Luft-Ansaugöffnung **19** eintretende Luft größtenteils unter dem Dach **2a** entlang und oberhalb der Messer **3** in den vorderen Bereich des Gehäuses geleitet mittels eines Luft-Leitbleches **22,** welches - vorzugsweise sich über die gesamte Breite des Gehäuses **2** erstreckend - im Abstand unter dem Dach **2a** verläuft und sowohl an seinem hinteren als auch an seinem vorderen Ende mit dem Dach **2a** und den Seitenwänden **2c, d** dicht verbunden ist.

Indem im vorderen Bereich des Luft-Leitbleches **22,** also in Fahrtrichtung **10** vor den Messereinheiten **20,** Durchtritts-Öffnungen **29** in dem Luft-Leitblech **22** vorhanden sind, kann dort die Luft nach unten hindurchtreten in den Bereich der beiden Messereinheiten **20,** die vorzugsweise gegenläufig angetrieben sind und zwar so, dass sich die Messer **3** im Bereich zwischen den beiden Messerachsen **4** von vorn nach hinten bewegen und dadurch eine Luftströmung zur hinteren Auslassöffnung und dem Anschluss zur Absaug-Leitung **25** erzeugen.

Vorzugsweise ist im Luft-Leitblech **22** auch im hinteren Bereich, also hinter der Längsposition der Messerachsen **4'** eine Durchtritts-Öffnung **29** vorhanden, allerdings deutlich kleiner, höchstens vom Querschnitt ein Drittel so groß wie diejenigen im vorderen Bereich in Summe, um die Strömung von den Messern **3** in Richtung nach hinten zu verstärken.

Der Boden **2e** ist gemäß **Figur 2c** etwa ab dem vorderen Beginn der Messereinheiten **20** geschlossen bis zur Rückwand **2b.**

Dies bedeutet, dass die Vorderkante des Bodens **2e** eine Kontur besitzt, die in Fahrtrichtung **10** gegenüber den Flugkreisen **21** der Messer **3** der Messereinheiten **20** etwas zurückversetzt ist, damit die über dem Boden **2e** rotierenden Messer 3 den sich bei Vorwärtsfahrt an die Vorderkante des Bodens **2e** annähernden Bewuchs abmähen können, wobei die Vorderkante des Bodens **2e** nicht exakt parallel zu den Flugkreisen **21** der Messer **3** verlaufen muss.

Wie am besten **Figur 2c** zeigt, besitzt die Vorderkante des Bodens **2e** somit zwei etwa halbrunde Vorsprünge in Breitenrichtung **11** nebeneinander, mit ihrem vordersten Punkt jeweils etwa an der Querposition der Messerwelle **4,** wobei die etwa halbkreisförmig konvex gebogene Vorderkante sich in der Aufsicht über etwa 100° bis 150° erstreckt, um den Messern **3** eine ausreichende Strecke in Umfangsrichtung zum Abmähen des Bewuchses wie Gras **G** zur Verfügung zu stellen.

Die einzelnen Messereinheiten **20** umfassen als Mäh-Antrieb **6** jeweils einen Motor **7,** der im oder am Dach **2a** des Gehäuses **2** befestigt ist, und aus dem die Messerwelle **4** nach unten vorsteht, an der zunächst ein rotierender Messerträger **5** drehfest befestigt ist.

Die im Betrieb rotierende Messerwelle **4** ist von einem stillstehenden Schutzrohr **8** umgeben, welches sich vom Motorgehäuse bis zum Messerträger **5** erstreckt und das Hängenbleiben und Umwickeln der drehenden Messerwelle **4** mit Gras **G** verhindern soll.

Der Messerträger **5** besteht vorzugsweise nicht aus einer runden Scheibe, sondern besitzt lediglich ein scheibenförmiges Zentralteil **5a,** von dem insbesondere einstückig damit ausgebildete Tragarme **5b** abstehen, in deren äußeren Enden sich Messer-Aufnahmen **26** befinden, sodass die Messerträger **5** eine etwa sternförmige Form - in der Aufsicht betrachtet - besitzen.

Der rotierbare Messerträger **5** besitzt über seinen Umfang verteilt - wie in den **Figuren 4a bis 8a** zu erkennen - an seinen radial äußeren Enden, insbesondere je einem der Tragarme **5b,** über den Umfang verteilt mehrere, in diesen Beispielen vier, Messeraufnahmen **26,** an denen jeweils ein balkenförmiges oder streifenförmiges Messer **3** mit seinem radial inneren Ende verschwenkbar um eine aufrecht stehende Messerachse **3'** befestigt werden kann, von dem das Messer bei Rotation fliehkraftbedingt radial nach außen über den Messerträger **5** vorsteht.

Ab der Befestigungsstelle des Messerträgers **5,** insbesondere dessen Tragarmes **5b,** kann nur ein Messer **3** oder mehrere, vorzugsweise zwei Messer **3** übereinander so befestigt werden, dass diese vorzugsweise unabhängig voneinander um ihre jeweilige Messerachse **3'** sind, wobei vorzugsweise übereinander angeordnete Messer **3** um eine gemeinsame Messerachse **3'** schwenkbar sind, die vorzugsweise durch eine Durchgangs-Öffnung durch den Messerträger **5,** insbesondere dessen Tragarm **5b,** hindurch verläuft, welche die Messer-Aufnahme **26** darstellt. In der Höhe ist das befestigte Messer **3** vorzugsweise durch einen Abstandshalter **27** - siehe **Figur 3b****,** **4b** - bzgl. des Messerträgers **5** versetzt.

Um ein über die Mähbreite lückenloses Abmähen des Bewuchses **G** sowie das ausreichend kleinteilige Zerhäckseln für den Abtransport durch die Absaug-Leitung **25** zu bewirken, können die Messer **3** der benachbarten Messereinheiten **20** unterschiedlich angeordnet sein:
Die **Figuren 4a**, b zeigen in Aufsicht sowie Frontansicht eine erste Möglichkeit, indem an jeder Messer-Aufnahme **26** zwei Messer **3** übereinander, jeweils in der Höhe gegenüber dem Messerträger **5** beabstandet durch eine Abstandshalter **27,** befestigt sind, und die beiden Messereinheiten **20** identisch, also auch mit identischen, gleich langen Messern **3,** ausgebildet sind.

Die oberen und unteren Messer **3** beider Messereinheiten **20** befinden sich jeweils auf gleicher Höhe.

Deren Flugkreise **21** reichen bis möglichst nahe an die mittig zwischen den beiden Messereinheiten **20** vertikal stehende Längsmittelebene **1"** heran, die lotrecht zur Verbindungslinie zwischen den beiden Rotationsachsen **5'** der beiden Messerträger **5** und damit die Rotationsachsen 4' der Messerwellen **4** verläuft.

Dadurch entsteht ein sich in Breitenrichtung **11** erstreckender Freigang **13** zwischen den beiden Messereinheiten **20,** der eine Kollision der - in Regel nicht synchronisiert zueinander angetriebenen - Messer **3** verhindert.

Damit in diesem Freigang **13** kein ungemähter Streifen an Bewuchs, ein sogenannter Bart, stehen bleibt, kann auf der Längsmittelebene **1"** vor dem engsten Abstand der beiden Flugkreise **21** eine Leiteinrichtung **9** angeordnet sein, die in der Aufsicht betrachtet ein pfeilförmig mit Spitze nach vorne in Mährichtung **10** weisendes Leitblech ist, welches sich mindestens über den Höhenbereich vom untersten bis zum obersten Messer **3** des Mähkopfes **1** erstreckt und das Mähgut **G** insbesondere von der Längsmittelebene **1"** aus weglenkt und einer der beiden Messereinheiten **20** zuführt.

Die **Figuren 6a**, b zeigen eine Lösung, bei der pro Messer-Aufnahme **26** wiederum jeweils zwei Messer **3** übereinander angeordnet sind, diese jedoch eine unterschiedliche Länge besitzen:
Im dargestellten Beispiel sind bei der rechten Messereinheit **20** die oberen Messer **3** länger als die unteren Messer, und zwar so lang, dass sie gemäß **Figur 6b** über die Längsmittelebene **1"** hinwegreichen, während die kürzeren unteren Messer diese nicht erreichen.

Bei der linken Messereinheit **20** ist es dagegen umgekehrt.

**Figur 6a** zeigt nur die oberen Messer **3** in der Aufsicht.

Zusätzlich sind die oberen Messer **3** beider Messereinheiten **20** und ebenso die unteren Messer 3 der beiden Messereinheiten **20** auf jeweils der gleichen Höhe angeordnet, ihre jeweiligen, auf gleicher Höhe liegenden, Flugkreise **21** berühren sich jedoch nicht.

Dadurch entsteht einerseits für die unteren Messer und andererseits für die oberen Messer jeweils ein Freigang **13,** von denen der eine links und der andere rechts der Längsmittelebene **1"** liegt. Dadurch wird ein über die obere Messerebene aufragender Bart vermieden.

Die oberen und unteren Messer **3** beider Messereinheiten **20** befinden sich jeweils auf gleicher Höhe.

Die **Figuren 5a**, b zeigen eine Lösung, bei der an jedem Tragarm **5b** und Messer-Aufnahme **26** jeweils nur ein Messer **3** befestigt ist, in Umlaufrichtung immer abwechselnd ein unteres und ein oberes Messer **3,** sodass also die Anzahl der Messer **3** der Anzahl der Messer-Aufnahmen **26** entspricht.

Dabei sind die Messer nicht gleich lang wie bei **Figur 4a****,** sondern wie bei **Figur 6a**, b bei der rechten Messereinheit **20** sind die oberen Messer **3** länger als die unteren Messer, und zwar so lang, dass sie gemäß **Figur 6b** über die Längsmittelebene **1"** hinwegreichen, während die kürzeren unteren Messer diese nicht erreichen.

Bei der linken Messereinheit **20** ist es dagegen umgekehrt.

Zusätzlich sind die oberen Messer **3** beider Messereinheiten **20** und ebenso die unteren Messer **3** der beiden Messereinheiten **20** auf jeweils der gleichen Höhe angeordnet, ihre auf gleicher Höhe liegenden Flugkreise **21** berühren sich jedoch nicht.

Dadurch ergeben sich beidseits der Längsmittelebene **1" je** ein Freigang **13** für die obere Messerebene 3a" einerseits und die untere Messerebene 3b" andereseits.

Die oberen und unteren Messer **3** beider Messereinheiten **20** befinden sich jeweils auf gleicher Höhe.

Die **Figuren 7a**, b zeigen dagegen eine Lösung, bei der die Messer **3** der beiden Messereinheiten **20** so lang sind, dass sich in der Aufsicht betrachtet die Flugkreise **21** sowohl der oberen Messer **3** als auch der unteren Messer **3** beider Messereinheiten **20** einander überlappen.

Um eine Kollision zu vermeiden, sind die Messer **3** der jeweiligen Messereinheiten **20** jedoch mindestens um die Dicke eines Messers **3** in der Höhe zueinander versetzt, sodass die oberen Messer **3** der - in diesem Fall rechten Messereinheit **20** - von der Höhenlage her sich zwischen den unteren und oberen Messern **3** der linken Messereinheit **20** befinden und die unteren Messer **3** der - in diesem Fall linken - Messeinheit **20** in der Höhenlage zwischen den Messern der rechten Messereinheit **20** befinden.

Neben den beschriebenen Lösungen analog der **Figuren 4** bis **7****,** bei denen sich die Messereinheiten **20,** also deren Messerwellen-Achsen **4'** auf gleicher Längsposition in Mährichtung **10** befinden, ist es natürlich auch möglich, die beiden Messereinheiten **20** in Längsrichtung **10** gemäß Figur 8a, b etwas zueinander zu versetzen und dadurch zu erreichen, dass sich die Flugkreise 21 der z.B. gleich langen Messer **3** beider Messereinheiten **20** in der Aufsicht betrachtet in der Breitenrichtung **11** überlappen, und dennoch nicht kollidieren.

Allerdings erzwingt dies ein in Längsrichtung **10** längeres Gehäuse **2** und evtl. eine Unwucht im Betrieb.

### BEZUGSZEICHENLISTE

- 1: Mähkopf
- 2: Mähkopf-Gehäuse, Gehäuse
- 2a: Dach
- 2b: Rückwand
- 2c, d: Seitenwand
- 2e: Boden
- 3: Messer
- 3': Schwenkachse
- 3", 3a": Messerebene
- 4: Messerwelle
- 5: Messerträger
- 5': Messerträger-Achse
- 6: Mäh-Antrieb
- 7: Motor
- 8: Schutzrohr
- 9: Leiteinrichtung, Leitblech
- 10: Fahrtrichtung, Fortschrittsrichtung
- 10": Längs-Mitteleben
- 11: Querrichtung, Breiten-Richtung
- 12: aufrechte Richtung, Vertikale
- 13: Freigang
- 14: Befestigungsstelle
- 15: Scheuch-Element
- 16: Haltebügel
- 16a: Querstrebe
- 17: Gleitkufe
- 18: Tragbalken
- 19: Luft-Ansaugöffnung
- 20: Messereinheit
- 20': Rotationsachse
- 21: Flugkreis
- 22: Luftleitblech
- 23: Front-Vorhang
- 24: Abstandssensor
- 25: Absaugleitung
- 26: Messer-Aufnahme
- 27: Abstandshalter
- 28: Abtastrolle
- 29: Luft-Ansaugöffnung

- 50: Auslegerarm

- G: Gras, Bewuchs

## Patentansprüche

1. Kreisel-Mähkopf (1) mit
- einem Mähkopf-Gehäuse (2),
- in dem mindestens eine Messereinheit (20) angeordnet ist,
- wobei die mindestens eine Messereinheit (20) mindestens ein Messer (3) umfasst, das an einer um eine aufrecht stehende Rotationsachse (20'), deren Richtung um maximal 20 % von der Vertikalen abweicht, rotierbaren Messerwelle (4) befestigt ist,
- die mindestens eine Messerwelle (4) von einem Mäh-Antrieb (6), der einen Motor (7) umfasst, rotierend angetrieben wird,
- wobei die Unterseite des Gehäuses (2) teilweise durch einen Boden (2e) verschlossen ist,
**dadurch gekennzeichnet, dass**
- im Dach (2a) des Gehäuses (2) mindestens eine Luft-Ansaugöffnung (19) vorhanden ist.

2. Mähkopf nach Anspruch 1,
**dadurch gekennzeichnet, dass**
- die Seitenwände (2c, d) des Gehäuses (2) im Wesentlichen geschlossen sind
und/oder
- die Richtung der Rotationsachse (20') um maximal 15 % von der Vertikalen abweicht.

3. Mähkopf nach einem der vorhergehenden Ansprüche,
**dadurch gekennzeichnet, dass**
- der Boden (2e) sich von der Unterseite der Rückwand (2b) aus in Mährichtung (10) nach vorne erstreckt mindestens bis zu den Rotationsachsen (20') der Messereinheiten (20),
- insbesondere der Boden (2e) soweit nach vorne reicht, dass lediglich die Messer (3), insbesondere nur die radial äußeren Enden der Messer (3), in der vorderen Hälfte ihres Flugkreises (21) über den Boden (2e) vorstehen,
- insbesondere nur in der vorderen Hälfte des Flugkreises (21) über den Boden (2e) vorstehen,

4. Mähkopf nach einem der vorhergehenden Ansprüche, wobei
- jede Messereinheit (20) einen an der rotierbaren Messerwelle (4) drehfest befestigten Messerträger (5) umfasst,
- an dem abseits seiner Rotationsachse (20') mehrere Messer (3) schwenkbar um eine aufrecht stehende Schwenkachse (3') befestigt sind,
**dadurch gekennzeichnet, dass**
- die Messerträger (5) vollständig und in allen Rotationslagen nach unten hin von dem Boden (2e) abgedeckt sind.

5. Mähkopf nach einem der vorhergehenden Ansprüche,
**dadurch gekennzeichnet, dass**
- die wenigstens eine Luft-Ansaugöffnung (19) im Vorderteil des Daches (2a), also insbesondere vor der wenigstens einen Durchlassöffnung für die Messerwelle (4), angeordnet ist,

6. Mähkopf nach einem der vorhergehenden Ansprüche,
**dadurch gekennzeichnet, dass**
- mit der wenigstens einen Luft-Ansaugöffnung (19) ein Luftstrom-Erzeuger, insbesondere ein Gebläse, strömungstechnisch so verbunden ist, dass dadurch ein Luftstrom durch die Luft-Ansaugöffnungen (19) ins Innere des Gehäuses (2) hinein erzeugt wird,
und/oder
- die wenigstens eine Luft-Ansaugöffnung (19) großflächig, insbesondere möglichst großflächig, ausgebildet ist.

7. Mähkopf nach einem der vorhergehenden Ansprüche,
**dadurch gekennzeichnet, dass**
- im Abstand oberhalb der Luft-Ansaugöffnungen (19) ein Luftleitblech (22) angeordnet ist, welches mit seiner Vorderkante vor den Luft-Ansaugöffnungen (19) auf der Oberseite des Daches (2a) des Gehäuses (2) dicht befestigt ist.

8. Mähkopf nach einem der vorhergehenden Ansprüche,
**dadurch gekennzeichnet, dass**
- an der Vorderseite des Gehäuses (2) ein Front-Vorhang (23), etwa aus Metall-Ketten, vorhanden ist, der den Luftwiderstand für durch die Vorderseite einströmende Luft möglichst stark erhöht, ohne den Bewuchs zu stark nieder zu drücken,
- insbesondere der Front-Vorhang (23) aus einem leichten, elastischen Material besteht,
- insbesondere der Front-Vorhang (23) in Querrichtung (11) nebeneinander angeordnete, einander berührende oder einander in Querrichtung überlappende, Front-Lamellen umfasst.

9. Mähkopf nach einem der vorhergehenden Ansprüche,
**dadurch gekennzeichnet, dass**
das Mähkopf-Gehäuse (2)
- an der Unterseite mehrere, in Fahrtrichtung (10) verlaufende, in der Breite schmale Gleitkufen (17) und/oder Tastrollen (28) aufweist,
- insbesondere an den Seitenwänden (2c, d), vorzugsweise nur an den Seitenwänden (2c, d),
- insbesondere entlang deren Unterkanten verlaufend.

10. Mähkopf nach einem der vorhergehenden Ansprüche,
**dadurch gekennzeichnet, dass**
- wenigstens ein berührungsloser Abstands-Sensor (24), insbesondere ein Ultraschall-Sensor oder ein Radar-Sensor, gegen den Untergrund gerichtet an oder in dem Gehäuse (2) angeordnet ist, vorzugsweise
- entweder vor dem Gehäuse (2),
- oder in Fahrtrichtung (10) hinter der Rückwand (2b),
- oder im Gehäuse (2) hinter der wenigstens einen Messerwelle (4), insbesondere hinter dem wenigstens einen Flugkreis (21).

11. Mähkopf nach Anspruch 10,
**dadurch gekennzeichnet, dass**
die Blickrichtung des Abstands-Sensors (24)
- durch eine Öffnung im Boden (2e) des Mähkopf-Gehäuses (2) hindurch verläuft,
und/oder
- durch den Bewegungsweg des nicht abgedeckten Teils des wenigstens einen Messers hindurch verläuft.

12. Mähkopf nach einem der vorhergehenden Ansprüche,
**dadurch gekennzeichnet, dass**
- ein in der Breiten-Richtung (11) verlaufender unterer Tragbalken (18) vorhanden ist, der unterhalb der Messereinheiten (20) verläuft und in dem die Messerwellen (4) zusätzlich gelagert sind, in dem sich die Messerwelle (4) nach unten bis zu dem Tragbalken (18) erstreckt,
- wobei die Flugkreise (21) in Fahrtrichtung (12) nach vorne über den Tragbalken (18) vorstehen,
- insbesondere die Unterseite des Gehäuses (2) zwischen dem Tragbalken (18) und der Rückwand (2b) des Gehäuses (2) geschlossen ist,
- insbesondere der Tragbalken (18) Bestandteil des Bodens (2e) ist oder an diesem befestigt ist.

13. Mähkopf nach einem der vorhergehenden Ansprüche,
**dadurch gekennzeichnet, dass**
- am Mähkopf (1) ein, insbesondere bewegliches, vor dem Mähkopf positionierbares, Scheuchelement (15) vorhanden ist, welches insbesondere mindestens bis auf die Messerebene (3"), insbesondere die unterste Messerebene (3") herabreicht,
- das wenigstens eine Scheuchelement (15) vorzugsweise an einem schwenkbaren oder verschiebbaren, insbesondere in der Aufsicht betrachtet U-förmigen Haltebügel (16) befestigt ist, der zwischen einer aktivierten Stellung vor dem Mähkopf (1) und einer deaktivierten Stellung auf dem Mähkopf (1) verschwenkbar oder verschiebbaren ist und von dessen Querstrebe (16a) das wenigstens eine Scheuchelement (15) nach unten ragt, insbesondere nach unten hängt.

14. Mähkopf nach Anspruch 13,
**dadurch gekennzeichnet, dass**
- das Scheuchelement (15) ein aufrecht verlaufendes, quer zur Fahrtrichtung (10) schmales Element (15) ist,
- das Scheuchelement (15) insbesondere ein aufrecht verlaufender, am oberen Ende befestigter Stab oder eine herabhängende Kette ist.

15. Mähkopf nach einem der vorhergehenden Ansprüche, wobei der Mähkopf (1) mehrere Messer-Einheiten (20) aufweist,
**dadurch gekennzeichnet, dass**
- der Mähkopf (1) wenigstens ein Paar mit je zwei Messer-Einheiten (20) umfasst, insbesondere nur ein Paar,
- wobei die beiden Messer-Einheiten (20) eines Paares gegenläufig so antreibbar sind, dass sich im Bereich dazwischen die Messer (3) entgegen der Fortschrittsrichtung (10) nach hinten bewegen.

16. Mähkopf nach einem der Ansprüche 4 bis 15, wobei
- jede Messereinheit (20) einen an der rotierbaren Messerwelle (4) drehfest befestigten Messerträger (5) umfasst,
- an dem abseits seiner Rotationsachse (20') mehrere Messer (3) schwenkbar um eine aufrecht stehende Schwenkachse (3') befestigt sind,
**dadurch gekennzeichnet, dass**
- jeder Messerträger (5) ein an der Messerwelle (4) befestigbares Zentralteil (5a) und davon radial abstrebende, über den Umfang des Zentralteiles (5a) verteilte, Tragarme (5b) aufweist, an deren freien Enden jeweils mindestens ein Messer (3) befestigbar ist,
- insbesondere mit unterschiedlichen radialen Abständen der Schwenkachse (3') von der Rotationsachse (20') innerhalb eines Messerträgers (5) und/oder im Vergleich zweier verschiedener Messerträger (5),
und/oder
- die Messerträger (5) plattenförmig gestaltet sind, insbesondere so gestaltet sind, dass sie aus einer ebenen Platte ausgeschnitten werden können.

17. Mähkopf nach einem der vorhergehenden Ansprüche,
**dadurch gekennzeichnet, dass**
- die Messer (3) des Mähkopfes (1) auf mindestens zwei Messerebenen (3") in verschiedenen Höhenlagen verteilt angeordnet sind.

18. Mähkopf nach einem der vorhergehenden Ansprüche,
**dadurch gekennzeichnet, dass**
- die Messer (3) einer Messereinheit (20) auf mindestens zwei Messerebenen (3a", 3b") in verschiedenen Höhenlagen verteilt angeordnet sind.

19. Mähkopf nach einem der vorhergehenden Ansprüche,
**dadurch gekennzeichnet, dass**
- entweder an einem Tragarm (5b) mindestens zwei Messer (3) auf verschiedenen Höhenlagen befestigt sind,
- insbesondere schwenkbar um die gleiche Schwenkachse (3').

20. Mähkopf nach einem der Ansprüche 1 bis 19,
**dadurch gekennzeichnet, dass**
- an einem Tragarm (5b) nur ein Messer (3) befestigt ist,
- die Messer (3) einer Messereinheit (20) an den verschiedenen Tragarmen (5b) in verschieden hoch liegenden Messerebene (3") angeordnet sind,
- insbesondere der Messerträger (5) eine gerade Anzahl von Tragarmen (5b) aufweist und
- bei Verteilung der Messer (3) auf genau zwei oder mehr Messerebenen (3") in Umfangsrichtung des Messerträgers (5) die Messer (3) an den Tragarmen (5b) abwechselnd einmal auf der unteren und einmal auf der oberen Messerebene (3") angeordnet sind.

21. Mähkopf nach einem der Ansprüche 4 bis 20,
**dadurch gekennzeichnet, dass**
- an jeder Messereinheit (20), insbesondere deren Messerträger (5) die Messer (3) nur auf jeweils einer Messerebene (3") angeordnet sind,
- bei benachbarten Messereinheiten (20), insbesondere, wenn diese gegenläufig rotieren, die Messer (3) in den beiden Messereinheiten (20) auf verschiedenen Messerebenen (3") angeordnet sind,
und/oder
- die, insbesondere alle, Messereinheiten (20), insbesondere deren Messerträger (5), unabhängig voneinander antreibbar sind.

22. Mähkopf nach einem der vorhergehenden Ansprüche,
**dadurch gekennzeichnet, dass**
- vor dem in der Aufsicht betrachteten Freigang (13) zwischen zwei Messereinheiten (20) eine Leiteinrichtung (9) für den Bewuchs, insbesondere ein Leitblech (9), angeordnet ist, dessen in Querrichtung (11) gemessene Breite größer ist als der Freigang (13),
- insbesondere die Leiteinrichtung (9) in Fahrtrichtung (12) unmittelbar vor den beiden Messereinheiten (20) angeordnet ist.

23. Mähkopf nach einem der vorhergehenden Ansprüche,
**dadurch gekennzeichnet, dass**
bei auf unterschiedlich hoch liegenden Messerebenen (3") liegenden Messern (3)
- im Falle von bei beiden benachbarten Messereinheiten (20) auf den gleichen mindestens zwei Messerebenen (3") liegenden Messern die Freigänge (13) (definieren) auf den beiden Messerebenen (3") in Querrichtung (11) zueinander versetzt sind, mindestens um die Breite des größeren der beiden Freigänge,
- im Falle das Messern (3) jeder der beiden benachbarten Messereinheiten (20a, b) auf nur einer oder mehreren Messerebenen (3") dieser Messereinheit (20a, b) und die beiden Messereinheiten keine übereinstimmenden Messerebenen aufweisen, die Flugkreise (21) der beiden Messereinheiten (20a, b) in der Aufsicht betrachtet in Querrichtung (11) einander überlappen.

24. Mähkopf nach einem der vorhergehenden Ansprüche,
**dadurch gekennzeichnet, dass**
die Messereinheiten (20) in Fahrtrichtung (12) zueinander versetzt und in Querrichtung (11) hinsichtlich ihrer Mäh-Breite (B) einander überlappend angeordnet sind.

## Claims

1. Rotary mowing head (1) with
- a mowing head housing (2),
- in which at least one blade unit (20) is arranged,
- wherein the at least one blade unit (20) comprises at least one blade (3) fastened to a blade shaft (4) that is able to rotate about an upright axis of rotation (20') whose direction deviates from the vertical by a maximum of 20%,
- the at least one blade shaft (4) is rotatingly driven by a mower drive (6) comprising a motor (7),
- wherein the underside of the housing (2) is partially closed by a floor (2e), **characterised in that**
- there is at least one air intake opening (19) in the cover (2a) of the housing (2).

2. Mowing head according to claim 1,
**characterised in that**
- the side walls (2c, d) of the housing (2) are substantially closed
and/or
- the direction of the axis of rotation (20') deviates from the vertical by a maximum of 15%.

3. Mowing head according to any of the preceding claims,
**characterised in that**
- the floor (2e) extends forwards from the underside of the rear wall (2b) in the mowing direction (10) at least as far as the axes of rotation (20') of the blade units (20),
- in particular, the floor (2e) extends forwards to an extent such that only the blades (3), in particular only the radially outer ends of the blades (3), protrude beyond the floor (2e) in the front half of their cutting circle (21),
- in particular protrude above the floor (2e) only in the front half of the cutting circle (21).

4. Mowing head according to any of the preceding claims,
- wherein each blade unit (20) comprises a blade carrier (5) fastened in a rotationally fixed manner to the rotatable blade shaft (4),
- to which a plurality of blades (3) are attached at a distance from its axis of rotation (20') so as to be pivotable about an upright pivot axis (3'),
**characterised in that**
- the blade carriers (5) are completely and in all rotational positions covered from below by the floor (2e).

5. Mowing head according to any of the preceding claims,
**characterised in that**
- the at least one air intake opening (19) is arranged in the front part of the cover (2a), i.e. in particular in front of the at least one passage opening for the blade shaft (4).

6. Mowing head according to any of the preceding claims,
**characterised in that**
- an air flow generator, in particular a fan, is fluidically connected to the at least one air intake opening (19) such that an air flow is generated through the air intake openings (19) into the interior of the housing (2),
and/or
- the at least one air intake opening (19) is large, in particular as large as possible.

7. Mowing head according to any of the preceding claims,
**characterised in that**
- an air baffle plate (22) is arranged at a distance above the air intake openings (19) whose front edge is tightly secured to the top of the cover (2a) of the housing (2) in front of the air intake openings (19).

8. Mowing head according to any of the preceding claims,
**characterised in that**
- a front curtain (23), for example made of metal chains, is provided at the front of the housing (2), which increases the air resistance for air flowing in through the front as much as possible without pressing down too strongly on the vegetation,
- in particular, the front curtain (23) consists of a light, elastic material,
- in particular, the front curtain (23) comprises front slats arranged next to one another in the transverse direction (11) and touching or overlapping one another in the transverse direction.

9. Mowing head according to any of the preceding claims,
**characterised in that**
the mowing head housing (2)
- has a plurality of narrow skids (17) and/or sensor rollers (28) on the underside running in the direction of travel (10),
- in particular on the side walls (2c, d), preferably only on the side walls (2c, d),
- in particular along their lower edges.

10. Mowing head according to any of the preceding claims,
**characterised in that**
- at least one contactless distance sensor (24), in particular an ultrasonic sensor or a radar sensor, is arranged on or in the housing (2) directed towards the ground, preferably
- either in front of the housing (2),
- or in the direction of travel (10) behind the rear wall (2b),
- or in the housing (2) behind the at least one blade shaft (4), in particular behind the at least one cutting circle (21).

11. Mowing head according to claim 10,
**characterised in that**
the viewing direction of the distance sensor (24)
- runs through an opening in the floor (2e) of the mowing head housing (2),
and/or
- runs through the movement path of the uncovered part of the at least one blade.

12. Mowing head according to any of the preceding claims,
**characterised in that**
- a lower support beam (18) extending in the width direction (11) is provided, which runs underneath the blade units (20) and in which the blade shafts (4) are additionally mounted, in which the blade shaft (4) extends downwards as far as the support beam (18),
- wherein the cutting circles (21) project forwards in the direction of travel (12) over the support beam (18),
- in particular, the underside of the housing (2) is closed between the support beam (18) and the rear wall (2b) of the housing (2),
- in particular, the support beam (18) is part of the floor (2e) or is attached to it.

13. Mowing head according to any of the preceding claims,
**characterised in that**
- a scaring element (15) is provided on the mowing head (1), in particular a movable scaring element (15) that can be positioned in front of the mowing head, which in particular reaches down at least to the blade level (3"), in particular the lowest blade level (3"),
- the at least one scaring element (15) is preferably attached to a pivotable or displaceable retaining bracket (16), that is in particular U-shaped as viewed from above, which is pivotable or displaceable between an activated position in front of the mowing head (1) and a deactivated position on the mowing head (1) and from whose cross strut (16a) the at least one scaring element (15) projects downwards, in particular hangs downwards.

14. Mowing head according to claim 13,
**characterised in that**
- the scaring element (15) is an upright, narrow element (15) running transversely to the direction of travel (10),
- the scaring element (15) is, in particular, an upright rod attached by the upper end or is a hanging chain.

15. Mowing head according to any of the preceding claims, wherein the mowing head (1) comprises a plurality of blade units (20),
**characterised in that**
- the mowing head (1) comprises at least one pair of two blade units (20), in particular only one pair,
- wherein the two blade units (20) of a pair can be driven in opposite directions such that the blades (3) in the area between them move backwards against the direction of progress (10).

16. Mowing head according to any of claims 4 to 15,
- wherein each blade unit (20) comprises a blade carrier (5) fastened in a rotationally fixed manner to the rotatable blade shaft (4),
- to which a plurality of blades (3) are attached at a distance from its axis of rotation (20') so as to be pivotable about an upright pivot axis (3'),
**characterised in that**
- each blade carrier (5) has a central part (5a) attachable to the blade shaft (4) and radially projecting support arms (5b) distributed around the circumference of the central part (5a), to each of whose free ends at least one blade (3) can be attached,
- in particular with different radial distances of the pivot axis (3') from the axis of rotation (20') within a blade carrier (5) and/or when comparing two different blade carriers (5),
and/or
- the blade carriers (5) are flat-shaped, in particular designed so that they can be cut out of a flat plate.

17. Mowing head according to any of the preceding claims,
**characterised in that**
- the blades (3) of the mowing head (1) are arranged on at least two blade levels (3") at different heights.

18. Mowing head according to any of the preceding claims,
**characterised in that**
- the blades (3) of a blade unit (20) are arranged on at least two blade levels (3a", 3b") at different heights.

19. Mowing head according to any of the preceding claims,
**characterised in that**
- either at least two blades (3) are attached to a support arm (5b) at different heights,
- in particular pivotable about the same pivot axis (3').

20. Mowing head according to any of claims 1 to 19,
**characterised in that**
- only one blade (3) is attached to a support arm (5b),
- the blades (3) of a blade unit (20) are arranged on the various support arms (5b) at blade levels (3") of different heights,
- in particular, the blade carrier (5) has an even number of support arms (5b) and
- when the blades (3) are distributed over exactly two or more blade levels (3") in the circumferential direction of the blade carrier (5), the blades (3) are arranged on the support arms (5b) alternately, once on the lower and once on the upper blade level (3").

21. Mowing head according to any of claims 4 to 20,
**characterised in that**
- on each blade unit (20), in particular its blade carrier (5), the blades (3) are arranged on only one blade level (3") in each case,
- in the case of neighbouring blade units (20), the blades (3) in the two blade units (20) are arranged on different blade levels (3"), in particular if they rotate in opposite directions,
and/or
- the, in particular all, blade units (20), in particular their blade carriers (5), can be driven independently of one another.

22. Mowing head according to any of the preceding claims,
**characterised in that**
- in front of the clear passage (13) as viewed from above, a guide device (9) for vegetation, in particular a guide plate (9) is arranged between two blade units (20) whose width measured in the transverse direction (11) is greater than the free passage (13),
- in particular, the guide device (9) is arranged immediately in front of the two blade units (20) in the direction of travel (12).

23. Mowing head according to any of the preceding claims,
**characterised in that**
with blades (3) lying on different blade levels (3")
- in the case of blades on the same at least two blade levels (3") on both neighbouring blade units (20), the clear passages (13) (define) on the two blade levels (3") are offset from one another in the transverse direction (11), at least by the width of the larger of the two clear passages,
- in the case of blades (3) of each of the two neighbouring blade units (20a, b) on only one or more blade levels (3") of this blade unit (20a, b) and the two blade units do not have matching blade levels, the cutting circles (21) of the two blade units (20a, b) overlap one another in the transverse direction (11) as viewed from above.

24. Mowing head according to any of the preceding claims,
**characterised in that**
the blade units (20) are offset relative to one another in the direction of travel (12) and are arranged so as to overlap one another in the transverse direction (11) with respect to their mowing width (B).

## Revendications

1. Tête faucheuse rotative (1) avec
- un boîtier de tête faucheuse (2),
- dans lequel est disposée au moins une unité de couteau (20),
- dans lequel ledit au moins une unité de couteau (20) comprend au moins un couteau (3) qui est fixé à un arbre porte-couteau (4) pouvant tourner autour d'un axe de rotation (20') vertical, dont le sens s'écarte de la verticale de 20 % au maximum,
- ledit au moins un arbre porte-couteau (4) est entraîné en rotation par un entraînement de fauche (6) qui comprend un moteur (7),
- dans lequel la face inférieure du boîtier (2) est partiellement fermée par un fond (2e),
**caractérisé en ce que**
- au moins une ouverture d'aspiration d'air (19) est présente dans le toit (2a) du boîtier (2).

2. Tête faucheuse selon la revendication 1,
**caractérisée en ce que**
- les parois latérales (2c, d) du boîtier (2) sont essentiellement fermées et/ou
- le sens de l'axe de rotation (20') s'écarte de la verticale de 15 % au maximum.

3. Tête faucheuse selon l'une des revendications précédentes,
**caractérisée en ce que**
- le fond (2e) s'étend à partir de la face inférieure de la paroi arrière (2b) vers l'avant dans le sens de la fauche (10) au moins jusqu'aux axes de rotation (20') des unités de couteau (20),
- en particulier le fond (2e) s'étend vers l'avant jusqu'à ce que seulement les couteaux (3), en particulier seulement les extrémités radialement extérieures des couteaux (3), dépassent du sol (2e) dans la moitié avant de leur cercle de vol (21),
- en particulier ne dépassent du sol (2e) que dans la moitié avant de leur cercle de vol (21).

4. Tête faucheuse selon l'une des revendications précédentes, dans laquelle
- chaque unité de couteau (20) comprend un porte-couteau (5) fixé en rotation sur l'arbre porte-couteau (4) rotatif,
- sur lequel sont fixées, à l'écart de son axe de rotation (20'), plusieurs couteaux (3) pivotant autour d'un axe de pivotement (3') vertical,
**caractérisé en ce que**
- les portes-couteau (5) sont entièrement recouverts vers le bas par le fond (2e), et ce dans toutes les positions de rotation.

5. Tête faucheuse selon l'une des revendications précédentes,
**caractérisé en ce que**
- ledit au moins une ouverture d'aspiration d'air (19) est disposée dans la partie avant du toit (2a), donc en particulier devant ledit au moins une ouverture de passage pour l'arbre porte-couteau (4).

6. Tête faucheuse selon l'une des revendications précédentes,
**caractérisée en ce que**
- un générateur de flux d'air, en particulier une soufflante, est relié sur le plan de flux audit au moins une ouverture d'aspiration d'air (19) de telle sorte qu'un flux d'air est ainsi généré à travers les ouvertures d'aspiration d'air (19) vers l'intérieur du boîtier (2),
et/ou
- ledit au moins une ouverture d'aspiration d'air (19) est réalisée sur une grande surface, en particulier sur une surface aussi grande que possible.

7. Tête faucheuse selon l'une des revendications précédentes,
**caractérisée en ce que**
- un déflecteur d'air (22) est disposé à distance au-dessus des ouvertures d'aspiration d'air (19), lequel est fixé de manière étanche par son bord avant devant les ouvertures d'aspiration d'air (19) sur la face supérieure du toit (2a) du boîtier (2).

8. Tête faucheuse selon l'une des revendications précédentes,
**caractérisée en ce que**
- à l'avant du boîtier (2), un rideau frontal (23) est présent, par exemple en chaînes métalliques, qui augmente autant que possible la résistance à l'air entrant par l'avant, sans trop comprimer la végétation,
- en particulier le rideau frontal (23) est constitué d'un matériau léger et élastique,
- en particulier le rideau frontal (23) comprend des lamelles frontales disposées les unes à côté des autres dans le sens transversal (11), se touchant ou se chevauchant dans le sens transversal.

9. Tête faucheuse selon l'une des revendications précédentes,
**caractérisée en ce que**
le boîtier de la tête faucheuse (2)
- présente sur sa face inférieure plusieurs patins (17) et/ou galets palpeurs (28) étroits en largeur et s'étendant dans le sens de la marche (10),
- en particulier sur les parois latérales (2c, d), de préférence uniquement sur les parois latérales (2c, d),
- s'étendant notamment le long de leurs bords inférieurs.

10. Tête faucheuse selon l'une des revendications précédentes,
**caractérisée en ce que**
- au moins un capteur de distance sans contact (24), notamment un capteur à ultrasons ou un capteur radar, orienté vers le sol, est disposé sur ou dans le boîtier (2), de préférence
- soit devant le boîtier (2),
- soit derrière la paroi arrière (2b) dans le sens de la marche (10),
- soit dans le boîtier (2) derrière ledit au moins un arbre porte-couteau (4), notamment derrière ledit au moins un cercle de vol (21).

11. Tête faucheuse selon la revendication 10,
**caractérisée en ce que**
le sens d'observation du capteur de distance (24)
- passe par une ouverture dans le fond (2e) du boîtier (2) de la tête faucheuse, et/ou
- passe par la trajectoire de la partie non couverte dudit au moins un couteau.

12. Tête faucheuse selon l'une des revendications précédentes,
**caractérisée en ce que**
- il existe une barre de support inférieure (18) s'étendant dans le sens de la largeur (11), qui s'étend en dessous des unités de couteau (20) et dans laquelle les arbres porte-couteau (4) sont en outre logés, dans laquelle l'arbre porte-couteau (4) s'étend vers le bas jusqu'à la barre de support (18),
- dans lequel les cercles de vol (21) dépassent vers l'avant de la barre de support (18) dans le sens de la marche (12),
- en particulier, la face inférieure du boîtier (2) est fermée entre la barre de support (18) et la paroi arrière (2b) du boîtier (2),
- en particulier la barre de support (18) fait partie du sol (2e) ou est fixée à celui-ci.

13. Tête faucheuse selon l'une des revendications précédentes,
**caractérisée en ce que**
- sur la tête faucheuse (1) est présent un élément de dissuasion (15), en particulier mobile, pouvant être positionné devant la tête faucheuse, qui descend en particulier au moins jusqu'au plan de couteau (3"), en particulier jusqu'au plan de couteau le plus bas (3"),
- ledit au moins un élément de dissuasion (15) est de préférence fixé à un étrier de retenue (16) pivotant ou coulissant, en particulier en forme de U, vu de dessus, qui peut pivoter ou coulisser entre une position activée devant la tête faucheuse (1) et une position désactivée sur la tête faucheuse (1) et de la traverse (16a) duquel ledit au moins un élément de dissuasion (15) fait saillie vers le bas, en particulier est suspendu vers le bas.

14. Tête faucheuse selon la revendication 13,
**caractérisée en ce que**
- l'élément de dissuasion (15) est un élément (15) s'étendant verticalement et étroit transversalement au sens de la marche (10),
- l'élément de dissuasion (15) est notamment une tige ou une chaîne pendante s'étendant verticalement et fixée à l'extrémité supérieure.

15. Tête faucheuse selon l'une des revendications précédentes,
dans laquelle la tête faucheuse (1) comporte plusieurs unités de couteau (20),
**caractérisée en ce que**
- la tête faucheuse (1) comprend au moins une paire de deux unités de couteau (20) chacune, en particulier une seule paire,
- dans lequel les deux unités de couteau (20) d'une paire peuvent être entraînées en sens inverse de telle sorte que, dans la zone située entre elles, les couteaux (3) se déplacent vers l'arrière dans le sens inverse du sens de progression (10).

16. Tête faucheuse selon l'une des revendications 4 à 15, dans laquelle
- chaque unité de couteaux (20) comprend un porte-couteau (5) fixé en rotation sur l'arbre porte-couteau rotatif (4),
- sur lequel sont fixées, à l'écart de son axe de rotation (20'), plusieurs couteaux (3) pivotant autour d'un axe de pivotement (3') vertical,
**caractérisé en ce que**
- chaque porte-couteau (5) présente une partie centrale (5a) pouvant être fixée à l'arbre porte-couteau (4) et des bras de support (5b) répartis sur la circonférence de la partie centrale (5a) et s'étendant radialement à partir de celle-ci, à l'extrémité libre desquels peut être fixé respectivement au moins un couteau (3),
- en particulier avec des distances radiales différentes de l'axe de pivotement (3') par rapport à l'axe de rotation (20') à l'intérieur d'un porte-couteau (5) et/ou en comparaison de deux porte-couteau (5) différents,
et/ou
- les portes-couteau (5) sont conçus en forme de plaque, notamment de telle sorte qu'ils peuvent être découpés dans une plaque plane.

17. Tête faucheuse selon l'une des revendications précédentes,
**caractérisée en ce que**
- les couteaux (3) de la tête faucheuse (1) sont répartis sur au moins deux plans de couteaux (3") à des hauteurs différentes.

18. Tête faucheuse selon l'une des revendications précédentes,
**caractérisée en ce que**
- les couteaux (3) d'une unité de couteau (20) sont répartis sur au moins deux plans de couteau (3a", 3b") à des hauteurs différentes.

19. Tête faucheuse selon l'une des revendications précédentes,
**caractérisée en ce que**
- soit au moins deux couteaux (3) sont fixées à des niveaux différents sur un bras de support (5b),
- notamment pivotant autour d'un même axe de pivotement (3').

20. Tête faucheuse selon l'une des revendications 1 à 19,
**caractérisée en ce que**
- un seul couteau (3) est fixé sur un bras de support (5b),
- les couteaux (3) d'une unité de couteau (20) sont disposés sur les différents bras de support (5b) dans des plans de couteaux (3") situés à des hauteurs différentes,
- en particulier le porte-couteau (5) présente un nombre pair de bras de support (5b) et,
- en cas de répartition des couteaux (3) sur exactement deux ou plusieurs plans de couteau (3") dans le sens circonférentiel du porte-couteau (5), les couteaux (3) sont disposés sur les bras de support (5b) alternativement une fois sur le plan de couteau inférieur et une fois sur le plan de couteau supérieur (3").

21. Tête faucheuse selon l'une des revendications 4 à 20,
**caractérisée en ce que**
- sur chaque unité de couteau (20), notamment leurs portes-couteau (5), les couteaux (3) ne sont disposés que sur un seul plan de couteau (3") à la fois,
- dans le cas d'unités de couteau (20) voisines, notamment lorsque celles-ci tournent en sens inverse, les couteaux (3) sont disposés dans les deux unités de couteau (20) sur des plans de couteau (3") différents,
et/ou
- les, notamment toutes les, unités de couteau (20), notamment leurs portes-couteau (5), peuvent être entraînées indépendamment les unes des autres.

22. Tête faucheuse selon l'une des revendications précédentes,
**caractérisée en ce que**
- un dispositif de guidage (9) de la végétation, en particulier une tôle de guidage (9), dont la largeur mesurée dans le sens transversal (11) est supérieure au dégagement (13), est disposé avant le dégagement (13), vu de dessus, entre deux unités de couteau (20),
- en particulier le dispositif de guidage (9) est disposé directement avant les deux unités de couteau (20) dans le sens de déplacement (12).

23. Tête faucheuse selon l'une des revendications précédentes,
**caractérisée en ce que,** dans le cas de couteaux (3) situés sur des plans de couteaux (3") situés à des hauteurs différentes,
- dans le cas de couteaux situés sur les mêmes au moins deux plans de couteaux (3") pour les deux unités de couteau (20) voisines, les dégagements (13) (définir) sur les deux plans de couteaux (3") sont décalés l'un par rapport à l'autre dans le sens transversal (11), au moins de la largeur du plus grand des deux dégagements,
- dans le cas où les couteaux (3) de chacune des deux unités de couteau (20a, b) voisines ne se trouvent que sur un ou plusieurs plans de couteau (3") de cette unité de couteau (20a, b) et que les deux unités de couteau ne présentent pas de plans de couteau concordants, les cercles de vol (21) des deux unités de couteau (20a, b), vu de dessus, se chevauchent mutuellement dans le sens transversal (11).

24. Tête faucheuse selon l'une des revendications précédentes,
**caractérisée en ce que**
les unités de couteau (20) sont décalées l'une par rapport à l'autre dans le sens de la marche (12) et se chevauchent dans le sens transversal (11) en ce qui concerne leur largeur de coupe (B).
